# EUROPEAN PATENT APPLICATION

(11) **EP 4 730 123 A1**
(43) Date of publication of application: **22.04.2026**
(21) Application number: 25741566.1
(22) Date of filing: 16.01.2025
(51) Int. Cl.: G06F 9/451

(54) **INTER-APPLICATION INTERACTION METHOD, ELECTRONIC DEVICE AND STORAGE MEDIUM**

(30) Priority: 17.01.2024 CN 202410071114
(71) Applicant: Huawei Technologies Co., Ltd., Shenzhen, Guangdong 518129 (CN)
(72) Inventor: ZHANG, Yayun, Shenzhen, Guangdong 518129 (CN); AI, Shangyou, Shenzhen, Guangdong 518129 (CN)
(74) Representative: MERH-IP Matias Erny Reichl Hoffmann Patentanwälte PartG mbB
(86) International application number: PCT/CN2025/072680
(87) International publication number: WO 2025/153005

(57) **Abstract**

This application provides an inter-application interaction method, an electronic device, and a storage medium. A first application and a second application are installed on an electronic device. The method includes: displaying, by the first application, a first user interface; receiving, by the first application, a first operation on the first user interface; in response to the first operation, rendering a first animation in the first application, and playing the first animation; rendering a second user interface in the second application; determining whether the rendering of the second user interface is completed; when the rendering of the second user interface is completed, stopping, by the first application, playing the first animation; and displaying, by the second application, the second user interface. According to the method, a delay of playing the first animation by the electronic device is shortened, slow response of the electronic device to a user operation for jumping to the second application is addressed, waiting time of a user is reduced, and visual experience of the user is improved.

## Description

This application claims priority to Chinese Patent Application No. 202410071114.9, filed with the China National Intellectual Property Administration on January 17, 2024 and entitled "INTER-APPLICATION INTERACTION METHOD, ELECTRONIC DEVICE, AND STORAGE MEDIUM", which is incorporated herein by reference in its entirety.

### TECHNICAL FIELD

This application relates to the field of terminal technologies, and in particular, to an inter-application interaction method, an electronic device, and a storage medium.

### BACKGROUND

With development of terminal technologies, an increasing quantity of applications are installed on an electronic device, and a user may take a photo/record a video, watch a movie or television series, listen to music, make a call, and the like by using the applications installed on the electronic device. This greatly improves use experience of people.

To better guide the user to use other applications installed on the electronic device, the electronic device may receive an operation of the user in one of the applications, jump to another application, and display a user interface in the another application. To improve visual experience of the user, the electronic device 100 may play a switching animation before jumping to the another application. However, currently, after receiving the operation of the user, the electronic device needs to wait for a period of time before the electronic device 100 can play the switching animation, leading to slow response. How to improve efficiency of jumping between applications and reduce a delay of playing the switching animation by the electronic device 100 is to be further studied.

### SUMMARY

This application provides an inter-application interaction method, an electronic device, and a storage medium, to shorten a delay of playing a first animation by an electronic device, address slow response of the electronic device to a user operation for jumping to a second application, reduce waiting time of a user, and improve visual experience of the user.

According to a first aspect, this application provides an inter-application interaction method. A first application and a second application are installed on an electronic device. The method includes: displaying, by the first application, a first user interface; receiving, by the first application, a first operation on the first user interface; in response to the first operation, rendering a first animation in the first application, and playing the first animation; rendering a second user interface in the second application; determining whether the rendering of the second user interface is completed; when the rendering of the second user interface is completed, stopping, by the first application, playing the first animation; and displaying, by the second application, the second user interface.

Optionally, the first application may be a camera application, and the second application may be a gallery application. To be specific, jumping from the camera application to the gallery application is implemented.

Optionally, the first application may be a gallery application, and the second application may be a camera application. To be specific, jumping from the gallery application to the camera application is implemented.

Optionally, rendering the first animation in the first application may mean that the first application renders the first animation, or may mean that a system function on the electronic device renders the first animation.

Optionally, rendering the second user interface in the second application may mean that the second application renders the second user interface, or may mean that a system function on the electronic device renders the second user interface.

According to the method, when receiving a user operation for jumping to the second application, the electronic device may play an animation by using the first application, and the second application renders the to-be-displayed second user interface. The first animation is played without waiting until drawing and rendering of the to-be-displayed second user interface in the second application are completed. This shortens a delay of playing the first animation by the electronic device, addresses slow response of the electronic device to the user operation for jumping to the second application, reduces waiting time of a user, and improves visual experience of the user.

With reference to the first aspect, in a possible implementation, playing, by the first application, the first animation and rendering the second user interface are performed in parallel.

To be specific, when receiving the user operation for jumping to the second application, the electronic device may play the animation by using the first application, and the second application renders the to-be-displayed second user interface at the same time. The first animation needs to wait for drawing and rendering of the to-be-displayed second user interface in the second application to be completed before the first animation is played.

With reference to the first aspect, in a possible implementation, when the rendering of the second user interface is completed, the method further includes: determining, by the second application, whether the playing of the first animation is completed; and when it is determined that the playing of the first animation is not completed, rendering, in the second application, an unplayed animation frame in the first animation, and playing the unplayed animation frame; and after the second application completes playing the unplayed animation frame, displaying, by the second application, the second user interface; or when it is determined that the playing of the first animation is completed, displaying, by the second application, the second user interface.

Optionally, after the first application stops playing the first animation, the first application may send a play progress of the first animation to the second application, so that the second application determines whether to continue to play the first animation.

When the playing of the first animation is completed, the second application directly switches to displaying the second user interface, without continuing to play the first animation. When the playing of the second user interface is not completed, the second application needs to continue to play the unplayed animation frame in the first animation, and after completing playing the unplayed animation frame in the first animation, the second application switches to displaying the second user interface. This can ensure that the electronic device switches to displaying the second user interface after the playing of the first animation is completed, to ensure that the electronic device smoothly switches from the first animation to displaying the second user interface.

With reference to the first aspect, in a possible implementation, when the rendering of the second user interface is not completed, the method further includes: determining, by the first application, whether the playing of the first animation is completed; and when the playing of the first animation is not completed, rendering, in the first application, an unplayed animation frame in the first animation, and playing the unplayed animation frame; or when the playing of the first animation is completed, displaying, by the first application, a third user interface, where the third user interface includes a last animation frame in the first animation.

Optionally, the second application may send a rendering progress of the second user interface to the first application, so that the first application can determine whether the rendering of the second user interface is completed.

When the rendering of the second user interface is completed, the first application needs to stop playing the first animation. When the rendering of the second user interface is not completed, the first application may continue to play the first animation.

With reference to the first aspect, in a possible implementation, the second user interface includes image content of the last animation frame in the first animation.

In this way, when the playing of the first animation is completed and the rendering of the second user interface has not been completed, the electronic device needs to continuously display the last animation frame in the first animation. The image content of the last animation frame in the first animation is set to be the same as or similar to image content of the second user, to ensure that the electronic device smoothly switches from the last animation frame in the first animation to displaying the second user interface, without an abrupt picture transition.

With reference to the first aspect, in a possible implementation, after receiving, by the first application, the first operation on the first user interface, the method further includes: determining, by the electronic device, whether there is a process of the second application; and when determining that there is no process of the second application, creating, by the electronic device, a process of the second application.

In this way, when the electronic device needs to use the second application, the electronic device may create a process of the second application, that is, start the second application, to ensure that the electronic device can normally use the second application. Compared with a solution in which a process of the second application is immediately created when the electronic device starts the first application, this can save memory space of the electronic device and avoid a waste of resources. In addition, if no process of the second application has been created before, when the first application receives a user operation, the electronic device creates a process of the second application. Because the first application further needs to play the first animation, the electronic device may create the process of the second application at the same time. The first animation is played without waiting until the electronic device creates the process of the second application. In other words, playing, by the first application, the first animation and creating, by the electronic device, the process of the second application are performed in parallel.

With reference to the first aspect, in a possible implementation, the first application is a camera application, the first user interface is an image shooting preview interface of the camera application, the second application is a gallery application, the first operation is an operation of tapping a thumbnail, and the second user interface includes an original image corresponding to the thumbnail.

In this way, jumping from the camera application to the gallery application can be implemented.

With reference to the first aspect, in a possible implementation, the first animation is an animation for transition from the thumbnail to the original image.

With reference to the first aspect, in a possible implementation, the second user interface does not include a control in a gallery. This can ensure that the image content of the last animation frame in the first animation is the same as or similar to the image content of the second user interface.

With reference to the first aspect, in a possible implementation, after displaying, by the second application, the second user interface, the method further includes: receiving, by the second application, a second operation of the user on the second user interface; and displaying, by the second application, a fourth user interface in response to the second operation, where the fourth user interface includes the original image corresponding to the thumbnail and a control in the gallery.

In this way, after the electronic device displays the second user interface, the electronic device may receive a user operation and display the fourth user interface, and the user may edit, on the fourth user interface, the original image corresponding to the thumbnail.

With reference to the first aspect, in a possible implementation, after stopping, by the first application, playing the first animation, the method further includes: performing, by the first application, any one or more of the following task items: turning off a camera, releasing a plug-in, stopping stream configuration, and stopping stream capturing.

In this way, the first application destroys an initialization setting only when determining that the rendering of the second user interface is completed, to avoid a case that frame freezing occurs due to frame loss when the first application plays the first animation.

According to a second aspect, this application provides an electronic device. The electronic device includes a memory and a processor. The memory is coupled to the processor. The memory is configured to store a computer program. When the processor invokes the computer program, the electronic device is enabled to perform the inter-application interaction method provided in any possible implementation of any one of the foregoing aspects.

According to a third aspect, this application provides a computer-readable storage medium, including instructions. When the instructions are run on an electronic device, the electronic device is enabled to perform the inter-application interaction method provided in any possible implementation of any one of the foregoing aspects.

According to a fourth aspect, this application provides a chip system. The chip system includes one or more processors. The processor is configured to invoke computer instructions, to enable an electronic device to perform the inter-application interaction method provided in any possible implementation of any one of the foregoing aspects.

According to a fifth aspect, this application provides a computer program product including instructions. When the computer program product is run on an electronic device, the electronic device is enabled to perform the inter-application interaction method provided in any possible implementation of any one of the foregoing aspects.

For descriptions of beneficial effects of the second aspect to the fifth aspect, refer to the descriptions of the beneficial effects of the first aspect. Details are not described herein again in this application.

### BRIEF DESCRIPTION OF DRAWINGS

FIG. 1A and FIG. 1B are diagrams of UIs on which a camera application is started on an electronic device 100;
FIG. 2 is a schematic flowchart of a method for displaying, by an electronic device 100, a user interface shown in FIG. 1B;
FIG. 3A is a diagram of a state change process in a lifecycle of an activity of a camera application during startup of the camera application;
FIG. 3B is a diagram of another state change process in a lifecycle of an activity of a camera application during startup of the camera application;
FIG. 4A to FIG. 4F are diagrams of UIs on which an electronic device 100 receives a user operation for jumping to a gallery application, jumps to the gallery application, and displays a large-image preview interface;
FIG. 5A and FIG. 5B are a schematic flowchart of a specific implementation of a method for jumping from a camera application to a gallery application;
FIG. 6A is a diagram of a state change process in a lifecycle of an activity of a camera application and a lifecycle of an activity of a gallery application during jumping from the camera application to the gallery application;
FIG. 6B is a diagram of another state change process in a lifecycle of an activity of a camera application and a lifecycle of an activity of a gallery application during jumping from the camera application to the gallery application;
FIG. 7A to FIG. 7G are diagrams of UIs on which an electronic device 100 receives a user operation for jumping to a camera application, jumps to the camera application, and displays an image shooting preview interface;
FIG. 8A and FIG. 8B are a schematic flowchart of a specific implementation of a method for jumping from a gallery application to a camera application;
FIG. 9 is a diagram of a state change process in a lifecycle of an activity of a camera application and a lifecycle of an activity of a gallery application during jumping from the gallery application to the camera application;
FIG. 10 is a diagram of a state change process in a lifecycle of an activity of a camera application in a case in which an electronic device 100 closes the camera application based on a user operation;
FIG. 11 is a schematic flowchart of an inter-application interaction method according to this application;
FIG. 12 is a diagram of a hardware structure of an electronic device 100; and
FIG. 13 is a diagram of a software structure of an electronic device 100.

### DESCRIPTION OF EMBODIMENTS

The following clearly describes the technical solutions in embodiments of this application in detail with reference to the accompanying drawings. In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The terms "first" and "second" used below are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, "a plurality of" means two or more than two, unless otherwise specified.

The term "user interface (user interface, UI)" in the following embodiments of this application is a medium interface for interaction and information exchange between an application or an operating system and a user. The user interface implements conversion between an internal form of information and a form acceptable to the user. The user interface is usually represented in a form of a graphical user interface (graphical user interface, GUI), and is a user interface that is related to a computer operation and that is displayed in a graphic manner. The user interface may be a visual interface element, for example, text, an icon, a button, a menu, a tab, a text box, a dialog box, a status bar, a navigation bar, or a widget, that is displayed on a display of a wearable device.

First, technical terms in this application are further described.

### 1. Activity (activity)

An activity is a component of an application, and is a component for interacting with a user. The activity provides a window for the application to draw an interface. The user may perform various operations such as tapping and sliding in the window. One activity may implement one window in an application, and one application may include a plurality of activities, so that the application can simultaneously display a plurality of windows.

A lifecycle of the activity may include a plurality of stages. The lifecycle of the activity is a process from creation to destroying of the activity. In the process, the activity experiences different state events. The lifecycle of the activity may include but is not limited to the following stages: onCreate(), onStart(), onResume(), onPause(), onStop(), and onDestroy().
onCreate(), onStart(), and onResume() are used when the application is started for the first time or the application switches from the background to the foreground for running. onPause(), onStop(), and onDestroy() are used when the application is closed or the application switches from the foreground to the background for running.
onCreate() is used when the application is started for the first time. For example, when an electronic device 100 receives tapping performed by a user on an application icon of an application, the electronic device 100 starts the application for the first time, and the electronic device 100 may create and initialize an activity of the application. The activity of the application is in an onCreate() state, and the activity of the application is used to provide a window for displaying a main interface of the application. For example, the electronic device 100 may obtain elements on the main interface of the application and layout information of the elements from a disk file, and store the elements and the layout information of the elements in a memory of the application (for example, a running memory of the application). The elements and the layout information of the elements are used to draw the main interface of the application. The elements may be understood as content that can be viewed by the user on a user interface. In an embodiment, the elements may include but are not limited to text, a picture, a widget (widget), and the like. The layout information of the elements may be understood as information, such as locations, sizes, and directions, of elements on a user interface.

In some embodiments, when the activity of the application is in the onCreate() state, the electronic device 100 further needs to perform an initialization setting on the application, so that the application can run normally and implement a related function. For example, when the application is a camera application, the initialization setting includes but is not limited to: turning on a camera, loading a plug-in, performing stream configuration, performing stream capturing, and the like. The stream configuration may be: configuring image shooting parameter information of a preview stream, including but not limited to an image shooting mode, an image shooting resolution, a zoom ratio, a picture ratio, and the like. The stream capturing may be: capturing an image by the camera based on the image shooting parameter information. After the initialization setting, the camera application may display an image shooting preview interface, and may record a video or take a photo based on an operation of the user on the image shooting preview interface. Optionally, the camera application further needs to store the image shooting parameter information in a running memory of the camera application.

onStart() is used when the application is started for the first time or switches from the background to the foreground for running. After the electronic device 100 creates the activity of the application, the activity of the application switches from the onCreate() state to an onStart() state. When the activity of the application is in the onStart() state, the electronic device 100 may obtain elements on a user interface of the application and layout information of the elements, and perform, based on the elements and the layout information of the elements, drawing and rendering in a window provided by the activity of the application, to obtain the user interface.

For example, when the electronic device 100 starts the application for the first time, the electronic device 100 may obtain the elements on the main interface and the layout information of the elements, and perform, based on the elements on the main interface and the layout information of the elements, drawing and rendering in a window provided by the activity of the application, to obtain the main interface. For another example, when the electronic device 100 switches from the background to the foreground for running, the electronic device 100 may obtain elements on a to-be-displayed user interface and layout information of the elements, and perform, based on the elements on the to-be-displayed user interface and the layout information of the elements, drawing and rendering in a window provided by the activity of the application, to obtain the to-be-displayed user interface. The to-be-displayed user interface of the application may be the main interface of the application or a sub-interface of the main interface of the application.

When the activity of the application is in the onStart() state, a user interface in the application is not displayed in the foreground.
onResume() is also used when the application is started for the first time or switches from the background to the foreground for running. After the electronic device 100 obtains a user interface of the application through drawing and rendering, the activity of the application switches from the onStart() state to the onResume() state. When the activity of the application is in the onResume() state, the electronic device 100 may display a user interface of the application in the foreground. The electronic device 100 may also receive various tap operations or slide operations of the user for an element on the user interface of the application. For example, when the application is the camera application and when the activity of the application is in the onResume() state, the camera application may display the image shooting preview interface.
onPause() is used when the application is closed or switches from the foreground to the background for running. When detecting that the application is closed or switches from the foreground to the background for running, the activity of the application switches from onResume() to the onPause() state. When the activity of the application is in the onPause() state, the electronic device 100 may perform grayscale processing on an element on a currently displayed user interface of the application, so that the element on the user interface no longer responds to various tap operations or slide operations of the user.
onStop() is used when the application is closed or switches from the foreground to the background for running. When detecting that the application is closed or switches from the foreground to the background for running, the activity of the application switches from onPause() to the onStop() state. When the activity of the application is in the onStop() state, the electronic device 100 may stop displaying a user interface of the application in the foreground. For example, when the application is the camera application, in the onStop() stage, the electronic device 100 needs to stop displaying the image shooting preview interface in the foreground.

In some embodiments, in the onStop() stage, the electronic device 100 further needs to destroy the initialization setting, to reduce power consumption of the application. For example, when the application is the camera application, in the onPause() stage, the electronic device 100 needs to turn off the camera, release the plug-in, stop stream configuration, or stop stream capturing.
onDestroy() is used when the application is closed. When detecting a user operation of closing the application, the activity of the application switches from onStop() to the onDestroy() state. When the activity of the application is in the onDestroy() state, the electronic device 100 may destroy the activity of the application, so that the electronic device 100 stops displaying a user interface in the application. In some embodiments, in the onDestroy() state, the electronic device 100 further needs to delete application information stored in the running memory of the application, close a process of the application, and release the running memory of the application. The application information includes but is not limited to elements on a user interface and layout information of the elements.

In some embodiments, the electronic device 100 may receive a user operation of the user in a first application, and jump from the first application to a second application. To improve visual experience of the user, the electronic device 100 may play a switching animation before the electronic device 100 jumps to the second application.

Before the electronic device 100 plays the switching animation, the electronic device 100 needs to create or obtain an activity of the second application, and draw and render, in a window provided by the activity of the second application, a to-be-displayed user interface in the second application. After the to-be-displayed user interface in the second application is drawn and rendered, the electronic device 100 may play the switching animation. After the electronic device 100 completes playing the switching animation, the electronic device 100 jumps to the second application, and displays the to-be-displayed user interface in the second application.

Based on the foregoing descriptions, in a process in which the electronic device 100 jumps from the first application to the second application, the activity of the second application needs to experience a plurality of states such as onCreate(), onStart(), and onResume(), or onStart() and onResume(). Each state includes a time-consuming operation. Therefore, the electronic device 100 needs to wait for a period of time before the electronic device 100 plays the switching animation, and the electronic device 100 can play the switching animation only after the electronic device 100 draws and renders the to-be-displayed user interface in the second application. During waiting, the user feels slow response of the electronic device 100.

Based on the foregoing analysis, to reduce a delay of playing the switching animation by the electronic device 100, after the electronic device 100 receives the user operation for jumping from the first application to the second application, the electronic device 100 may immediately respond and play the switching animation. This application provides an inter-application interaction method. The method includes but is not limited to the following steps.

Step 1: An electronic device 100 displays a first user interface in a first application, and receives a user operation performed by a user on the first user interface. In response to the user operation, the electronic device 100 determines to jump to a second application.

For example, the first application may be a camera application, the first user interface may be an image shooting preview interface of the camera application, the second application may be a gallery application, and the user operation may be an input operation, for example, tapping, on a review control on the image shooting preview interface of the camera application. In this way, jumping from the camera application to the gallery application can be implemented.

For example, the first application may be a gallery application, the first user interface may be a large-image preview interface or a large-image editing interface in the gallery application, the second application may be a camera application, and the user operation may be an input operation, for example, a pull-down operation, on a picture displayed in the gallery application. In this way, jumping from the gallery application to the camera application can be implemented.

Step 2: The electronic device 100 draws and renders a plurality of image frames in a first animation by using the first application, and plays the plurality of image frames in the first animation.

For example, when the first application is a camera application, the camera application may obtain a thumbnail displayed in a review control, and perform a zoom-in operation on the thumbnail, to obtain the plurality of image frames in the first animation.

For example, when the first application is a gallery application, the camera application may obtain a picture displayed on a large-image preview interface or a large-image editing interface, and perform a zoom-out operation on the picture, to obtain the plurality of image frames in the first animation.

Step 3: The electronic device 100 draws and renders a to-be-displayed second user interface in the second application.

Optionally, step 3 and step 2 may be performed simultaneously. Alternatively, step 3 is performed at a moment before step 2, or step 3 is performed at a moment after step 2. Step 4: After the drawing and the rendering of the second user interface are completed, the electronic device 100 jumps to the second application, and displays the second user interface.

Step 4: The electronic device 100 displays the second user interface in the second application.

In some embodiments, after the drawing and the rendering of the second user interface are completed, rendering of the second user interface in the second application has not been completed, and the electronic device 100 may wait until the first application completes playing the plurality of image frames in the first animation, and then switch to displaying the second user interface in the second application.

In some embodiments, after the drawing and the rendering of the second user interface are completed, playing of animation frames in the first animation has not been completed. The electronic device 100 may draw and render, by using the second application, a remaining incompletely played image frame in the first animation, and continue to play the remaining incompletely played image frame in the first animation. After playing of the first animation is completed, the electronic device 100 displays the second user interface. In this way, the electronic device 100 can jump from the first application to the second application more naturally.

According to the method, when receiving the user operation for jumping to the second application, the electronic device 100 may immediately play the first animation, without waiting until the drawing and the rendering of the to-be-displayed second user interface in the second application are completed. This shortens a delay of playing the first animation by the electronic device 100, addresses slow response of the electronic device 100 to the user operation for jumping to the second application, reduces waiting time of the user, and improves visual experience of the user.

In addition to the camera application and the gallery application, the first application and the second application may alternatively be other applications. In this application, only an example in which the first application and the second application are the camera application and the gallery application is used for description, but this does not constitute a limitation.

An application interaction method provided in this application includes but is not limited to the following stages: starting a camera application and displaying an image shooting preview interface of the camera application; receiving a user operation for jumping to a gallery application, playing a first switching animation, jumping to the gallery application, and displaying a large-image preview interface; receiving a user operation for jumping to the camera application, playing a second switching animation, jumping to the camera application, and displaying an image shooting preview interface; and closing the camera application. That is, an electronic device 100 may receive a user operation to jump from a camera application to a gallery application, and the electronic device 100 may also receive a user operation to jump from the gallery application to the camera application.

The following describes the foregoing stages in detail with reference to diagrams of UIs and schematic flowcharts of methods.
**1. Start a camera application and display an image shooting preview interface of the camera application.**

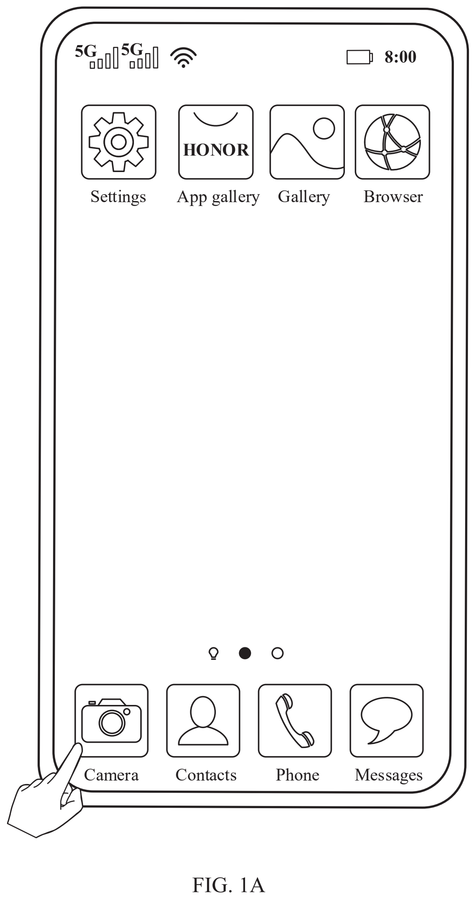

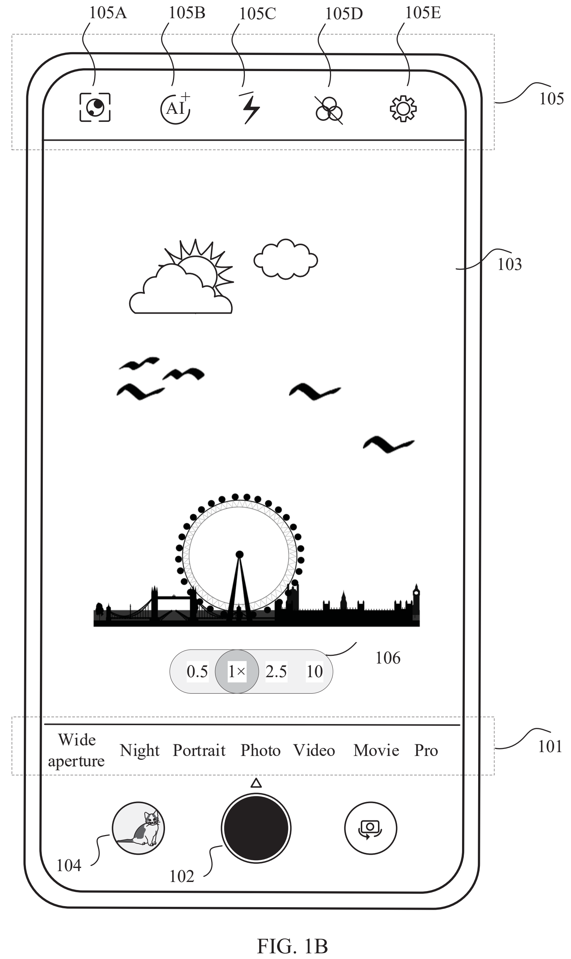

FIG. 1A and FIG. 1B are diagrams of UIs on which a camera application is started on an electronic device 100.

As shown in FIG. 1A, the electronic device 100 may display a desktop, and a page on which application icons are placed is displayed on the desktop. The page includes a plurality of application icons (for example, a Settings application icon, an App gallery application icon, a Gallery application icon, and a Browser application icon). A page indicator is further displayed below the plurality of application icons, to indicate a location relationship between a currently displayed page and another page. A dock area is displayed below the page indicator. The dock area includes a plurality of dock icons, for example, a Camera application icon, a Contacts application icon, a Phone application icon, and a Messages application icon. The dock area remains displayed during page switching. In some embodiments, the page may alternatively include a plurality of application icons and a page indicator. The page indicator may not be a part of the page, and may exist independently. The dock icons are also optional. This is not limited in this embodiment of this application.

The electronic device 100 may receive an input (for example, tapping) performed by a user on the Camera application icon. In response to the input operation, the electronic device 100 may display a user interface shown in FIG. 1B. FIG. 1B shows a user interface of an image shooting and display service provided by an electronic device 100 according to an embodiment of this application. The user interface may also be referred to as an image shooting preview interface.

As shown in FIG. 1B, the preview interface may include a mode bar 101, a capture control 102, a preview window 103, a review control 104, a shortcut function area 105, and a focal length adjustment option 106.

The mode bar 101 may include a plurality of image shooting mode options, for example, "Night", "Portrait", "Photo", and "Video". Different image shooting modes may provide image shooting services with different effects for the user. The user may select, according to different requirements, any one of the plurality of image shooting modes for image shooting. For example, "Photo" may be a default image shooting mode, and is used to take a photo. "Video" is used to record a video. The "Night" mode is applicable to a dark image shooting scene, for example, night. The "Portrait" mode is applicable to an image shooting scene in which a photographed object is a person. The electronic device 100 may further provide more image shooting modes, for example, "Wide aperture", "Movie", and "Pro". Examples are not described herein one by one.

The electronic device 100 may detect a user operation performed on an image shooting mode option in the mode bar 101, and change a currently used image shooting mode based on the user operation. The user operation is, for example, a slide-left/slide-right operation. For example, when detecting that the mode bar 101 is dragged to slide left (the slide-left operation) and an indicator stops at the "Portrait" option, the electronic device 100 may switch to the "Portrait" mode. By default, the electronic device 100 uses the "Photo" mode first.

The capture control 102 is used to trigger photographing. The electronic device 100 may detect whether a user operation, for example, a tap operation, is performed on the capture control 102. After detecting a user operation performed on the capture control 102, the electronic device 100 may generate a photographing instruction. The electronic device 100 may obtain, according to the photographing instruction, an image reported by a camera at a corresponding timestamp, and then save the image as a photo. In some embodiments, after the electronic device 100 receives the user operation performed on the capture control 102, if a process of a Gallery application is not pulled up, the electronic device 100 may pull up the process of the Gallery application, so that the electronic device 100 can store a captured picture or video in the Gallery application.

The preview window 103 may be used to display, in real time, an image reported by the camera. In different image shooting modes, the electronic device 100 may process an image reported by the camera, to improve display effect of the image. For example, in the "Portrait" mode, the electronic device 100 may blur a background in an image reported by the camera, to highlight a portrait. Herein, the preview window 103 may display, in real time, images processed by using image processing algorithms corresponding to different image shooting modes, so that the user can perceive, in real time, image shooting effects corresponding to different image shooting modes.

The review control 104 may be used to browse a thumbnail of a captured photo/video. After detecting a user operation performed on the review control 104, the electronic device 100 may also display a picture corresponding to the thumbnail. In some embodiments, after the electronic device 100 receives the user operation performed on the review control 104, if the process of the Gallery application is not pulled up, the electronic device 100 may pull up the process of the Gallery application, so that the electronic device 100 can jump to the Gallery application to display the picture corresponding to the thumbnail.

The shortcut function area 105 may include a hero video mode control 105A, an AI scene recognition control 105B, a flash control 105C, a color mode control 105D, a settings control 105E, and the like. When enabled, the hero video mode control 105A may be used to trigger the electronic device 100 to recognize a main subject among a plurality of persons in a preview picture. When enabled, the AI scene recognition control 105B may be used to trigger the electronic device 100 to recognize an image shooting scene in a preview picture. Currently, the AI scene recognition control 105B is in a disabled state. The flash control 105C may be used to trigger the electronic device 100 to turn on or turn off a flash. The color mode control 105D may be used to trigger the electronic device 100 to process, by using a color filter, an image captured by the camera. The settings control 105E may be used to set an image shooting parameter (for example, an image size or an image storage format) of the electronic device 100, enable an "auto snapshot" function of the electronic device 100, and the like.

The focal length adjustment option 106 shows a plurality of zoom ratio options, for example, a 0.5× zoom ratio option, a 1× zoom ratio option, a 2.5× zoom ratio option, and a 10× zoom ratio option.

A current zoom ratio is 1×. The preview window 103 displays an image frame captured by the electronic device 100 at a zoom ratio of 1×.

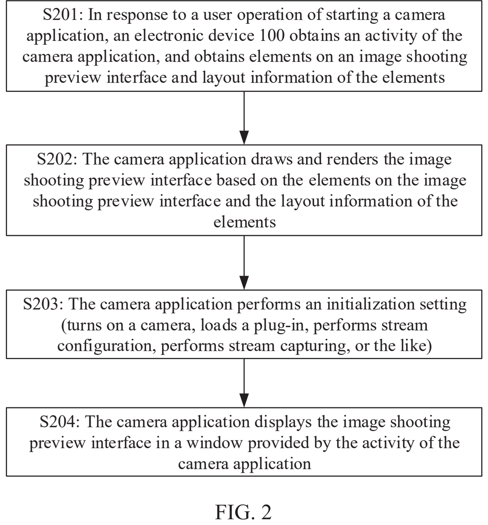

FIG. 2 is a schematic flowchart of a method for displaying, by an electronic device 100, the user interface shown in FIG. 1B.

S201: In response to a user operation of starting a camera application, the electronic device 100 obtains an activity of the camera application, and obtains elements on an image shooting preview interface and layout information of the elements.

For example, the user operation of starting the camera application may be an input operation, for example, tapping, on the Camera application icon shown in FIG. 1A.

In response to the user operation of starting the camera application, the electronic device 100 obtains the activity of the camera application.

In a possible implementation, if the camera application is started for the first time, the electronic device 100 needs to create and obtain the activity of the camera application, obtain the elements on the image shooting preview interface and the layout information of the elements from a disk file, and store the elements on the image shooting preview interface and the layout information of the elements in a running memory of the camera application.

In another possible implementation, if the camera application is started not for the first time and the camera application is already running in the background, the activity of the camera application already exists, and the electronic device 100 directly obtains the activity of the camera application, without creating the activity of the camera application. The electronic device 100 may directly obtain the elements on the image shooting preview interface and the layout information of the elements from a running memory of the camera application.

S202: The camera application draws and renders the image shooting preview interface based on the elements on the image shooting preview interface and the layout information of the elements.

When the activity of the camera application is in an onStart() state, the electronic device 100 may draw and render the image shooting preview interface based on the elements on the image shooting preview interface and the layout information of the elements.

S203: The camera application performs an initialization setting (turns on a camera, loads a plug-in, performs stream configuration, performs stream capturing, or the like).

Optionally, if the camera application is started for the first time and the activity of the camera application is in an onCreate() state, the camera application further needs to perform an initialization setting; or if the camera application is started not for the first time and the activity of the camera application is in the onStart() state, the camera application further needs to perform an initialization setting, so that the camera application can run normally and implement a related function. For example, the initialization setting includes but is not limited to: turning on a camera, loading a plug-in, performing stream configuration, performing stream capturing, and the like. The stream configuration may be: configuring image shooting parameter information of a preview stream, where the image shooting parameter information includes but is not limited to an image shooting mode, an image shooting resolution, a zoom ratio, a picture ratio, and the like.

Optionally, S202 and S203 may be performed simultaneously, or S203 may be performed before S202, or S203 may be performed after S202.

S204: The camera application displays the image shooting preview interface in a window provided by the activity of the camera application.

After the electronic device 100 completes drawing and rendering the image shooting preview interface, the activity of the camera application may switch from the onStart() state to an onStart() state, and remains in the onResume() state.

When the activity of the camera application is in the onResume() state, the camera application may display the image shooting preview interface in the window provided by the activity of the camera application.

In some embodiments, the camera application may further receive a user operation, for example, an operation of taking a photo or recording a video, on the image shooting preview interface, and save a captured photo or video in a gallery application in response to the user operation.

Optionally, when the activity of the camera application is in the onResume() state, the electronic device 100 may further perform another task. This is not limited in this application.

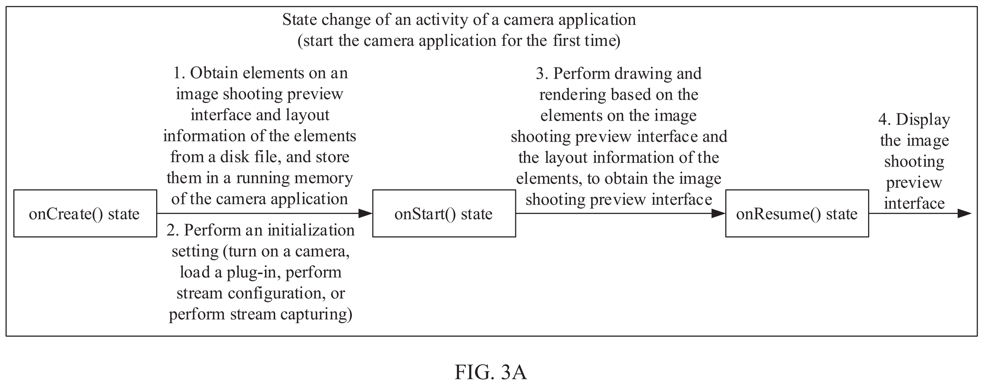

FIG. 3A is a diagram of a state change process in a lifecycle of an activity of a camera application during startup of the camera application.

In a possible implementation, if the camera application is started for the first time, an electronic device 100 needs to create and obtain the activity of the camera application.

In this case, as shown in FIG. 3A, the electronic device 100 creates and initializes the activity of the camera application, and the activity of the camera application needs to be in an onCreate() state. When the activity of the camera application is in the onCreate() state, the electronic device 100 further needs to obtain elements on an image shooting preview interface and layout information of the elements from a disk file, and store the elements on the image shooting preview interface and the layout information of the elements in a running memory of the camera application. The image shooting preview interface is a to-be-displayed user interface of the camera application. For example, the elements on the image shooting preview interface may be a plurality of elements displayed on the user interface shown in FIG. 1B.

In some embodiments, when the activity of the camera application is in the onCreate() state, the electronic device 100 further needs to perform an initialization setting on the camera application, so that the camera application can run normally and implement a related function. For example, the initialization setting includes but is not limited to: turning on a camera, loading a plug-in, performing stream configuration, performing stream capturing, and the like. The stream configuration may be: configuring image shooting parameter information of a preview stream, where the image shooting parameter information includes but is not limited to an image shooting mode, an image shooting resolution, a zoom ratio, a picture ratio, and the like. The image shooting parameter information in FIG. 3A may be obtained from a disk file. The stream capturing may be: capturing an image by the camera based on the image shooting parameter information. After the initialization setting, the camera application may display the image shooting preview interface, and may record a video or take a photo based on an operation of a user on the image shooting preview interface. Optionally, the camera application further needs to store the image shooting parameter information in a running memory of the camera application.

After the initialization setting of the camera application is completed, the activity of the camera application may switch from the onCreate() state to an onStart() state. When the activity of the camera application is in the onStart() state, the camera application may perform drawing and rendering based on the elements on the image shooting preview interface and the layout information of the elements, to obtain the image shooting preview interface.

After the camera application obtains the image shooting preview interface through drawing and rendering, the activity of the camera application may switch from the onStart() state to an onResume() state. When the activity of the camera application is in the onResume() state, the camera application may display the image shooting preview interface in a window provided by the activity of the camera application.

In another possible implementation, if the camera application is started not for the first time and the camera application is already running in the background, the activity of the camera application already exists, and the electronic device 100 directly obtains the activity of the camera application, without creating the activity of the camera application.

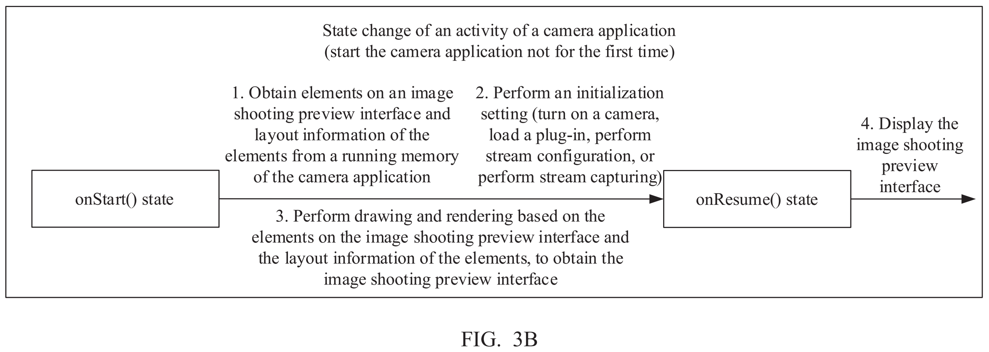

FIG. 3B is a diagram of another state change process in a lifecycle of an activity of a camera application during startup of the camera application.

In this case, as shown in FIG. 3B, the activity of the camera application has been created and initialized, and the activity of the camera application directly enters an onStart() state.

When the activity of the camera application is in the onStart() state, the camera application may obtain elements on an image shooting preview interface and layout information of the elements from a running memory of the camera application. In some embodiments, the camera application further needs to perform an initialization setting on the camera application, so that the camera application can run normally and implement a related function. For example, the initialization setting includes but is not limited to: turning on a camera, loading a plug-in, performing stream configuration, performing stream capturing, and the like. The stream configuration may be: configuring image shooting parameter information of a preview stream. The image shooting parameter information in FIG. 3B may be obtained from the running memory of the camera application. The image shooting parameter information includes but is not limited to an image shooting mode, an image shooting resolution, a zoom ratio, a picture ratio, and the like. The stream capturing may be: capturing an image by the camera based on the image shooting parameter information. After the initialization setting, the camera application may display the image shooting preview interface, and may record a video or take a photo based on an operation of a user on the image shooting preview interface. Optionally, the camera application further needs to store the image shooting parameter information in the running memory of the camera application.

When the activity of the camera application is in the onStart() state, the camera application may further perform drawing and rendering based on the elements on the image shooting preview interface and the layout information of the elements, to obtain the image shooting preview interface.

After the camera application obtains the image shooting preview interface through drawing and rendering, the activity of the camera application may switch from the onStart() state to an onResume() state. When the activity of the camera application is in the onResume() state, the camera application may display the image shooting preview interface in a window provided by the activity of the camera application.

In some embodiments, when the activity of the camera application is in the onResume() state, if a process of a gallery application is not pulled up and an electronic device 100 does not receive a user operation performed on a review control 104 or does not receive a user operation performed on a capture control 102, the camera application may not pull up the process of the gallery application, that is, does not start the gallery application. This can save memory space of the electronic device 100. When receiving a user operation performed on the review control 104 or receiving a user operation performed on the capture control 102, the camera application then pulls up the process of the gallery application. In this way, when the electronic device 100 needs to use the gallery application, the electronic device 100 may pull up the process of the gallery application, that is, start the gallery application, to ensure that the electronic device 100 can normally use the gallery application. Compared with a solution in which the process of the gallery application is immediately pulled up when the electronic device 100 starts the camera application, this can save memory space of the electronic device 100 and avoid a waste of resources.

**2. Receive a user operation for jumping to a gallery application, play a first switching animation, jump to the gallery application, and display a large-image preview interface.**

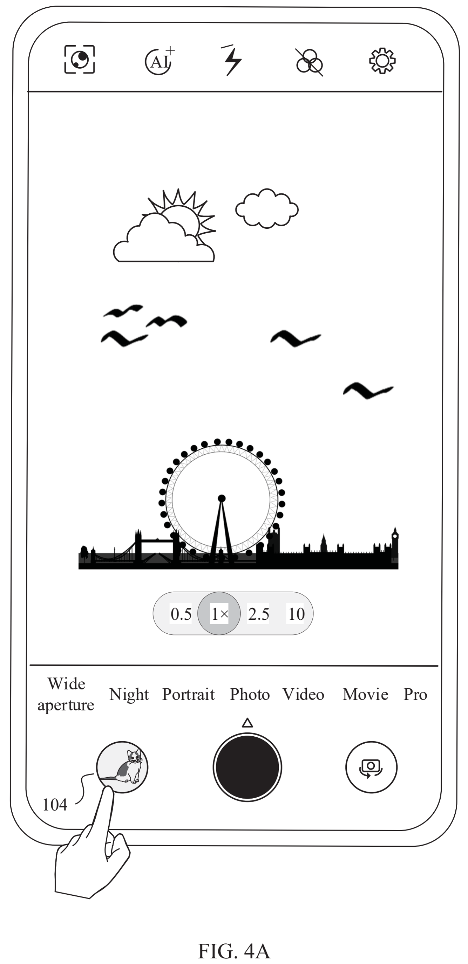

**FIG. 4A to FIG. 4F** **are diagrams of UIs on which an electronic device 100 receives a user operation for jumping to a gallery application, jumps to the gallery application, and displays a large-image preview interface.**

In some embodiments, the electronic device 100 may receive a user operation of a user on an image shooting preview interface of a camera application, and jump to the gallery application. For example, the user operation may be an input operation on a review control 104 on the image shooting preview interface.

To improve visual experience of the user, the electronic device 100 may play a first switching animation before the electronic device 100 jumps to the gallery application.

While playing the first switching animation, the electronic device 100 may obtain an activity of the gallery application, and draw and render a to-be-displayed large-image preview interface of the gallery application.

In this way, playing the first switching animation, and drawing and rendering the to-be-displayed large-image preview interface of the gallery application may be performed simultaneously, to reduce waiting time of the user.

For example, as shown in FIG. 4A, the electronic device 100 may receive an input operation, for example, a tap operation, of the user for the review control 104. In response to the input operation of the user, the electronic device 100 may obtain an animation element and an animation parameter, draw and render an animation frame based on the animation element and the animation parameter to obtain a plurality of animation frames in the first switching animation, and play the plurality of animation frames in the first switching animation.

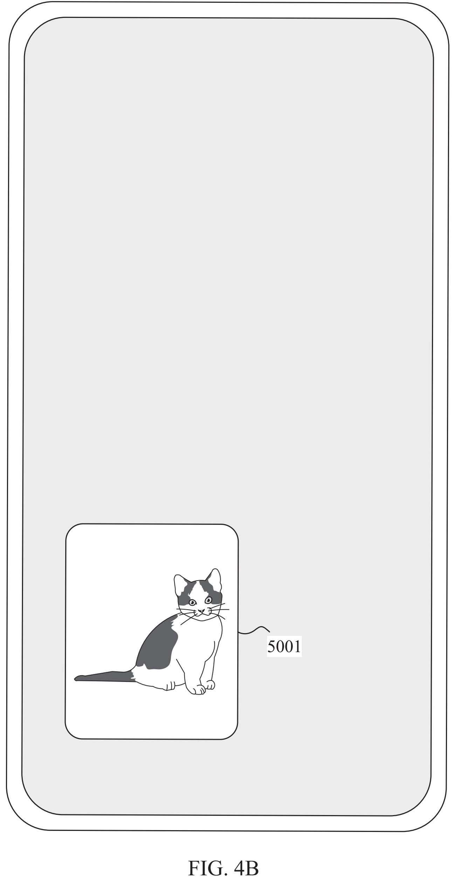

For example, as shown in FIG. 4B to FIG. 4E, the electronic device 100 may sequentially play an animation frame 5001, an animation frame 5002, an animation frame 5003, and an animation frame 5004 in the first switching animation.

It can be learned from the animation frame 5001, the animation frame 5002, the animation frame 5003, and the animation frame 5004 that the animation frame is obtained through zoom-in based on a thumbnail displayed in the review control 104. The animation element that may be obtained by the electronic device 100 may be the thumbnail displayed in the review control 104. The animation parameter may be a size of each animation frame, for example, a size of the animation frame 5001, a size of the animation frame 5002, a size of the animation frame 5003, or a size of the animation frame 5004. The size of the animation frame 5001 is less than the size of the animation frame 5002, the size of the animation frame 5002 is less than the size of the animation frame 5003, and the size of the animation frame 5003 is less than the size of the animation frame 5004.

After the electronic device 100 completes playing the first switching animation, the electronic device 100 may switch to displaying the large-image preview interface of the gallery application.

Optionally, image content of the large-image preview interface of the gallery application may be the same as image content of a last animation frame in the first switching animation. For example, the large-image preview interface of the gallery application may alternatively be an interface that displays the animation frame 5004, and the large-image preview interface does not include one or more editing options. A reason lies in: When the drawing and the rendering of the large-image preview interface are completed, the gallery application determines that the playing of the first switching animation is also completed. If a moment at which the camera application completes playing the first switching animation is earlier than a moment at which the gallery application completes drawing and rendering the large-image preview interface, the camera application needs to suspend displaying the last animation frame in the first switching animation, until the drawing and the rendering of the large-image preview interface are completed, and then the electronic device 100 switches to displaying the large-image preview interface of the gallery application. If the image content of the last animation frame in the first switching animation greatly differs from the image content of the large-image preview interface of the gallery application, the user visually experiences an abrupt image transition and frame freezing, and user experience is poor. In view of this, the image content of the last animation frame in the first switching animation may be set to be the same as the image content of the large-image preview interface of the gallery application. When the moment at which the camera application completes playing the first switching animation is earlier than the moment at which the gallery application completes drawing and rendering the large-image preview interface, the user does not perceive image switching, so that user experience is improved. Optionally, the image content includes but is not limited to a picture, a picture size, picture transparency, and the like.

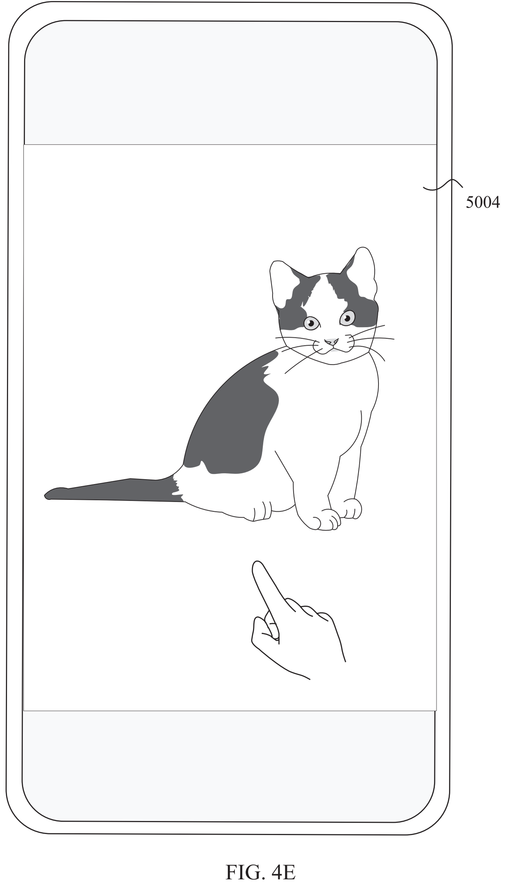

Optionally, the large-image preview interface of the gallery application includes only a picture, for example, a picture shown in FIG. 4E. The picture may be an original image corresponding to the thumbnail displayed in the review control 104 in FIG. 4A. The large-image preview interface of the gallery application does not include one or more editing options, so that the electronic device 100 can naturally switch from the first switching animation to displaying the large-image preview interface of the gallery application.

In some embodiments, after the electronic device 100 displays the large-image preview interface of the gallery application, the electronic device 100 may receive an input operation, for example, tapping, of the user on the large-image preview interface, so that the electronic device 100 displays a large-image editing interface of the gallery application. The large-image editing interface includes one or more editing options, and the user may perform, on the large-image editing interface, an operation, for example, editing or sharing, on a displayed picture.

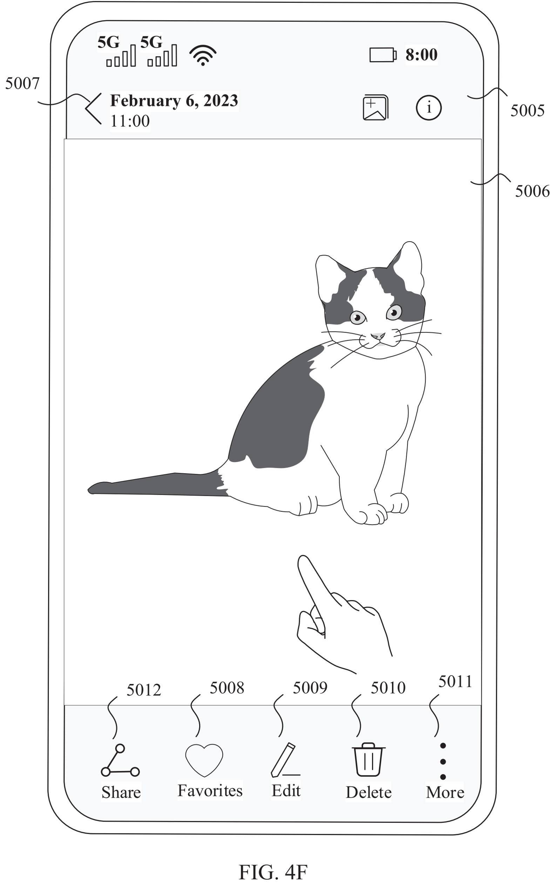

For example, as shown in FIG. 4E, the electronic device 100 may receive an input operation, for example, tapping, of the user on the large-image preview interface. In response to the input operation of the user, the electronic device 100 may display a user interface 5005 shown in FIG. 4F. The user interface 5005 includes a picture 5006, and the picture 5006 may be the original image corresponding to the thumbnail displayed in the review control 104 in FIG. 4A.

As shown in FIG. 4F, the user interface 5005 not only includes the picture 5006, but also includes a plurality of picture editing options, for example, a Back option 5007, a Share option 5012, a Favorites option 5008, an Edit option 5009, a Delete option 5010, and a More option 5011. The user may re-jump, by using the Back option 5007, to displaying the image shooting preview interface of the camera application. The user may share the picture 5006 to another application on the electronic device 100 or to another electronic device by using the Share option 5012. The user may save the picture 5006 to a favorites folder on the electronic device 100 by using the Favorites option 5008. The user may edit, for example, crop, rotate, or add a filter and a special effect to, the picture 5006 by using the Edit option 5009. The user may delete, by using the Delete option 5010, the picture 5006 saved in the gallery application. The user may perform more other operations on the picture 5006 by using the More option 5011.

It should be noted that FIG. 4B to FIG. 4E show only a part of animation frames in the first switching animation, and the first switching animation may further include more other animation frames; and FIG. 4B to FIG. 4E also show only one display style of the first switching animation, and the first switching animation may alternatively be in another display style. This is not limited in this application.

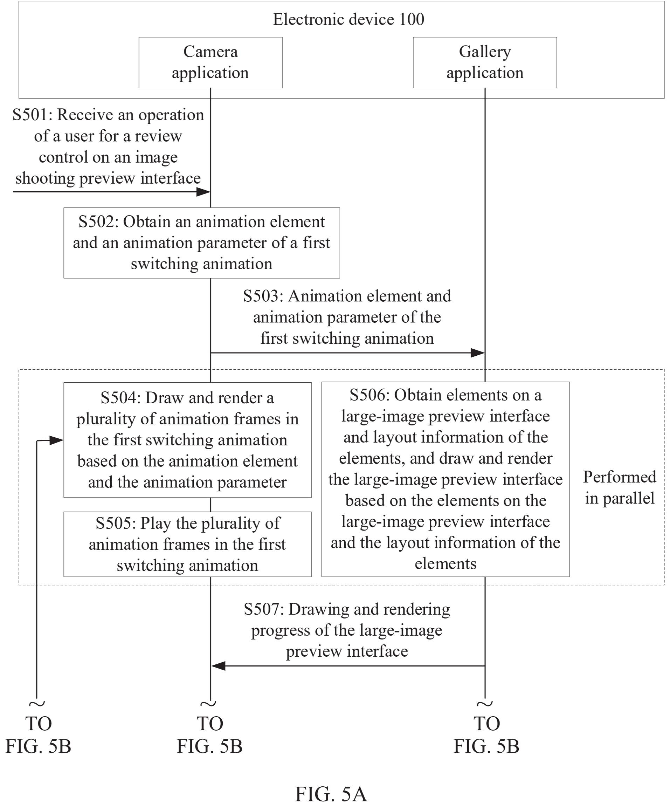

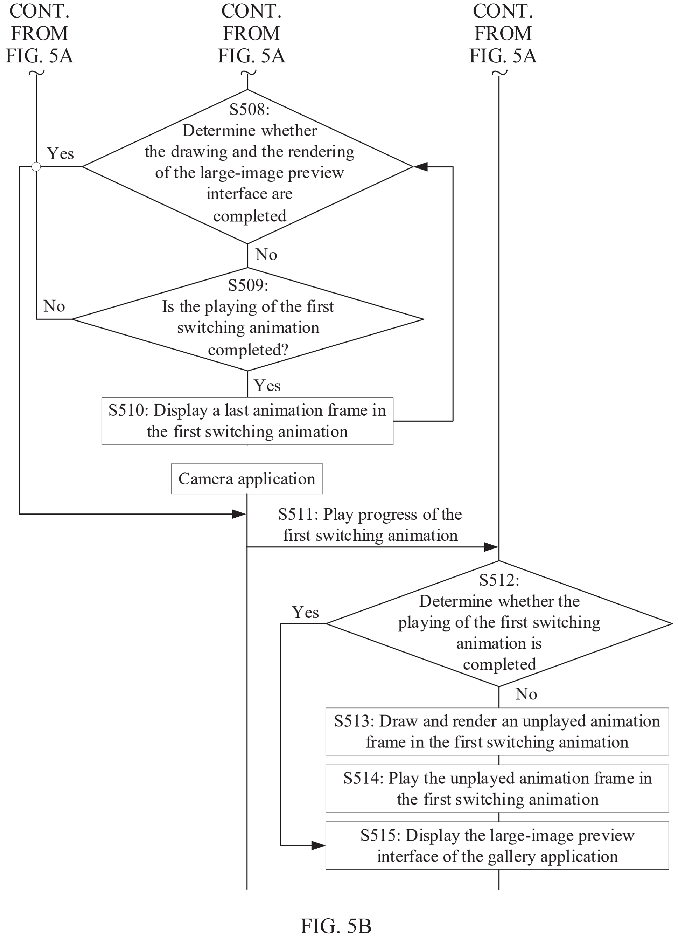

**FIG. 5A** **and** **FIG. 5B** **are a schematic flowchart of a specific implementation of a method for jumping from a camera application to a gallery application.**

S501: The camera application receives an operation of a user for a review control on an image shooting preview interface.

In some embodiments, the camera application may receive an input operation, for example, tapping, performed by the user on the review control 104 on the image shooting preview interface. In response to the input operation of the user, an electronic device 100 may jump from the camera application to a large-image preview interface of the gallery application.

In some embodiments, when the camera application receives the operation of the user for the review control on the image shooting preview interface, the electronic device 100 further needs to determine whether a process of the gallery application exists. When no process of the gallery application exists, that is, the gallery application is not started, the electronic device 100 may create a process of the gallery application, to ensure that the electronic device 100 can normally use the gallery application. When a process of the gallery application already exists, for example, the gallery application is running in the background, the electronic device 100 may not need to create a process of the gallery application. In this way, when the electronic device 100 needs to use the gallery application, the electronic device 100 may create a process of the gallery application, that is, start the gallery application, to ensure that the electronic device 100 can normally use the gallery application. Compared with a solution in which a process of the gallery application is immediately created when the electronic device 100 starts the camera application, this can save memory space of the electronic device 100 and avoid a waste of resources. In addition, if no process of the gallery application has been created before, when the camera application receives the operation of the user for the review control on the image shooting preview interface, the electronic device 100 creates a process of the gallery application. Because the camera application further needs to play a first switching animation, the electronic device 100 may create the process of the gallery application at the same time. The first switching animation is played without waiting until the electronic device 100 creates the process of the gallery application. In other words, playing, by the camera application, the first switching animation and creating, by the electronic device 100, the process of the gallery application are performed in parallel.

S502: The camera application obtains an animation element and an animation parameter of the first switching animation.

The camera application needs to wait for a period of time when jumping to the gallery application. To improve user experience within the period of time of waiting for jumping, the camera application may play the first switching animation, to improve visual experience of the user.

Before playing the first switching animation, the camera application needs to obtain the animation element and the animation parameter of the first switching animation, and perform drawing and rendering based on the animation element and the animation parameter of the first switching animation to obtain a plurality of animation frames.

The animation element may be image content in an animation frame. The animation parameter may include but is not limited to the following information: a size, transparency, and a location of an animation frame, and the like. For example, the animation element may be a thumbnail displayed in a review control 104 shown in FIG. 4A.

In a possible implementation, an animation element and an animation parameter that correspond to each animation frame in the first switching animation are prestored on the electronic device 100, and the camera application may directly obtain, from the electronic device 100, the animation element and the animation parameter that correspond to each animation frame in the first switching animation.

In another possible implementation, the camera application may alternatively calculate, in real time based on duration of the first switching animation, an animation parameter corresponding to each animation frame in the first switching animation. Optionally, the first switching animation may include preset duration, for example, 300 ms. The camera application may determine, based on display duration of each animation frame, a quantity of animation frames included in the first switching animation. For example, if the display duration of each animation frame is 50 ms, the first switching animation includes six animation frames. Then the animation parameter corresponding to each animation frame in the first switching animation is determined based on an animation parameter of an initial animation frame in the first switching animation, an animation parameter of an ending animation frame in the first switching animation, and the quantity of animation frames.

Optionally, animation elements in different animation frames may be the same or different. This is not limited in this application.

S503: The camera application sends the animation element and the animation parameter of the first switching animation to the gallery application.

After obtaining the animation element and the animation parameter of the first switching animation, the camera application further needs to send the animation element and the animation parameter of the first switching animation to the gallery application. In this way, after the electronic device 100 jumps to the gallery application, if the playing of the first switching animation has not been completed, the gallery application may draw and render an unplayed animation frame based on the animation element and the animation parameter of the first switching animation, to ensure that the electronic device 100 can complete playing the first switching animation, and smoothly and naturally switch from the first switching animation to displaying a large-image preview interface of the gallery application.

Optionally, S503 may be performed before, after, or simultaneously with any step before S511.

S504: The camera application draws and renders a plurality of animation frames in the first switching animation based on the animation element and the animation parameter.

S505: The camera application plays the plurality of animation frames in the first switching animation.

After obtaining the animation element and the animation parameter of the first switching animation, the camera application may draw and render the plurality of animation frames in the first switching animation based on the animation element and the animation parameter, and play the plurality of animation frames in the first switching animation.

For example, the plurality of animation frames in the first switching animation may be an animation frame 5001, an animation frame 5002, an animation frame 5003, and an animation frame 5004 shown in FIG. 4B to FIG. 4E.

In some embodiments, in response to the operation of the user for the review control on the image shooting preview interface, the electronic device 100 determines that the current user operation is a user operation for jumping to the gallery application. The electronic device 100 may determine that the camera application is to run in the background and the gallery application is to run in the foreground. According to a principle that a priority of foreground running is higher than a priority of background running, the electronic device 100 may lower a CPU scheduling priority of the camera application. After the CPU scheduling priority of the camera application is lowered, the camera application may be unable to draw and render the plurality of animation frames in the first switching animation in a timely manner, leading to frame loss. To ensure that the camera application normally draws and renders the plurality of animation frames in the first switching animation without frame loss, that is, to ensure that the CPU scheduling priority of the camera application is not lowered, the camera application may be bound to a callback for an onCreate() state of an activity of the gallery application or a callback for an onStart() state of an activity of the gallery application. A reason lies in: The callback for the onCreate() state of the activity of the gallery application or the callback for the onStart() state of the activity of the gallery application is in a foreground running state. Binding a specific service in the camera application to the callback for the onCreate() state of the activity of the gallery application or the callback for the onStart() state of the activity of the gallery application enables the electronic device 100 to consider that the camera application is also running in the foreground. This ensures that the CPU scheduling priority of the camera application is not lowered.

Optionally, the specific service may be an empty service used for jumping from the camera application to the gallery application.

S506: The gallery application obtains elements on a large-image preview interface and layout information of the elements, and draws and renders the large-image preview interface based on the elements on the large-image preview interface and the layout information of the elements.

Optionally, S506, S504, and S505 may be performed in parallel. Alternatively, S506 is performed at a moment before S504, or S506 is performed at a moment after S504. This is not limited in this application.

According to the method, after detecting the user operation for jumping to the gallery application, the electronic device 100 may simultaneously play the first switching animation and draw and render the to-be-displayed large-image preview interface of the gallery application. The first switching animation is played without waiting until the drawing and the rendering of the to-be-displayed large-image preview interface of the gallery application are completed. This shortens a delay of playing the first switching animation by the electronic device 100, addresses slow response of the electronic device 100 to the user operation for jumping to the gallery application, reduces waiting time of the user, and improves visual experience of the user.

In response to the operation of the user for the review control on the image shooting preview interface, the gallery application may obtain the elements on the large-image preview interface and the layout information of the elements, and draw and render the large-image preview interface based on the elements on the large-image preview interface and the layout information of the elements.

In a possible implementation, if the gallery application is started for the first time, the electronic device 100 needs to create and obtain the activity of the gallery application, obtain the elements on the large-image preview interface and the layout information of the elements from a disk file, and store the elements on the image shooting preview interface and the layout information of the elements in a running memory of the gallery application.

In another possible implementation, if the gallery application is started not for the first time and the gallery application is already running in the background, the activity of the gallery application already exists, and the electronic device 100 directly obtains the activity of the gallery application, without creating the activity of the gallery application. The gallery application may directly obtain the elements on the large-image preview interface and the layout information of the elements from a running memory of the gallery application.

S507: The gallery application sends a drawing and rendering progress of the large-image preview interface to the camera application.

Optionally, the drawing and rendering progress of the large-image preview interface may be a large-image preview interface drawing and rendering completion message. After the gallery application completes drawing and rendering the large-image preview interface, the gallery application sends the large-image preview interface drawing and rendering completion message to the camera application.

Optionally, the drawing and rendering progress of the large-image preview interface carries a large-image preview interface drawing and rendering completion or non-completion message. S507 may be performed irregularly, periodically, or at a specific interval, or S507 may be performed after the drawing and the rendering of the large-image preview interface are completed.

S508: The camera application needs to determine whether the drawing and the rendering of the large-image preview interface are completed.

While playing the first switching animation, the camera application needs to determine whether the drawing and the rendering of the large-image preview interface of the gallery application are completed.

Optionally, the camera application may determine, based on the drawing and rendering progress of the large-image preview interface that is sent by the gallery application, whether the drawing and the rendering of the large-image preview interface are completed.

When the drawing and rendering progress of the large-image preview interface may be the large-image preview interface drawing and rendering completion message, if the camera application receives no drawing and rendering progress of the large-image preview interface that is sent by the gallery application, the camera application may determine that the drawing and the rendering of the large-image preview interface are not completed; or if receiving the drawing and rendering progress of the large-image preview interface that is sent by the gallery application, the camera application may determine that the drawing and the rendering of the large-image preview interface are completed.

When the drawing and rendering progress of the large-image preview interface carries the large-image preview interface drawing and rendering completion or non-completion message, after receiving the drawing and rendering progress of the large-image preview interface, the camera application may determine, based on the large-image preview interface drawing and rendering completion message carried in the drawing and rendering progress of the large-image preview interface, that the gallery application completes drawing and rendering the large-image preview interface.

After the drawing and the rendering of the large-image preview interface of the camera application are completed, the camera application needs to stop drawing and playing the first switching animation.

When the drawing and the rendering of the large-image preview interface of the camera application are not completed, the camera application may continue playing the first switching animation until the drawing and the rendering of the large-image preview interface of the camera application are completed, and then the camera application stops drawing and playing the first switching animation.

When determining that the drawing and the rendering of the large-image preview interface are completed, the camera application performs S511.

When determining that the drawing and the rendering of the large-image preview interface are not completed, the camera application performs S509.

S509: The camera application needs to determine whether the playing of the first switching animation is completed.

When the camera application determines that the drawing and the rendering of the large-image preview interface are not completed, the camera application needs to determine whether the playing of the first switching animation is completed, and determine whether to continue playing the first switching animation or display a last animation frame in the first switching animation.

When determining that the drawing and the rendering of the large-image preview interface are not completed and the playing of the first switching animation is not completed, the camera application needs to continue to draw and render an unplayed animation frame in the first switching animation, and play the unplayed animation frame in the first switching animation, that is, the camera application performs S504 and S505.

When determining that the drawing and the rendering of the large-image preview interface are not completed but the playing of the first switching animation is completed, the camera application needs to display the last animation frame in the first switching animation, that is, the camera application performs S510.

S510: The camera application displays the last animation frame in the first switching animation.

For example, the last animation frame in the first switching animation may be the animation frame 5004 shown in FIG. 4E.

S511: The camera application sends a play progress of the first switching animation to the gallery application.

S512: The gallery application needs to determine whether the playing of the first switching animation is completed.

When determining that the drawing and the rendering of the large-image preview interface are completed, the camera application stops playing an animation frame in the first switching animation, and sends the play progress of the first switching animation to the gallery application.

The play progress of the first switching animation may be that the camera application has played an m^{th} animation frame in the first switching animation, where the first switching animation includes n animation frames, and m is less than or equal to n.

After the gallery application receives the play progress of the first switching animation that is sent by the camera application, the gallery application needs to determine whether the playing of a switching animation is completed.

m being equal to n indicates that the camera application has completed playing the first switching animation, and S515 is to be performed.

m being less than n indicates that the camera application has not completed playing the first switching animation, and playing of an (m+1)^{th} animation frame to an n^{th} animation frame in the first switching animation has not been completed. The gallery application continues to play the (m+1)^{th} animation frame to the n^{th} animation frame in the first switching animation. S513 is to be performed.

In some embodiments, when determining that the drawing and the rendering of the large-image preview interface of the gallery application are completed, in addition to stopping drawing and playing the first switching animation, the camera application further needs to destroy an initialization setting, for example, perform an operation of turning off a camera, releasing a plug-in, stopping stream configuration, or stopping stream capturing, to reduce power consumption of the electronic device 100.

To destroy the initialization setting, the camera application needs to preempt a CPU resource. If the camera application destroys the initialization setting while drawing and playing the first switching animation, the camera application may fail to schedule a CPU resource in a timely manner to draw and render an animation frame, leading to frame freezing due to frame loss. According to the method, the camera application destroys the initialization setting only when determining that the drawing and the rendering of the large-image preview interface of the gallery application are completed, to avoid a case that frame freezing occurs due to frame loss when the camera application plays the first switching animation.

S513: The gallery application draws and renders an unplayed animation frame in the first switching animation.

S514: The gallery application plays the unplayed animation frame in the first switching animation.

When determining that the playing of the first switching animation is not completed, the gallery application may draw and render an unplayed animation frame in the first switching animation based on an obtained animation element and animation parameter of the unplayed animation frame, and play the unplayed animation frame in the first switching animation.

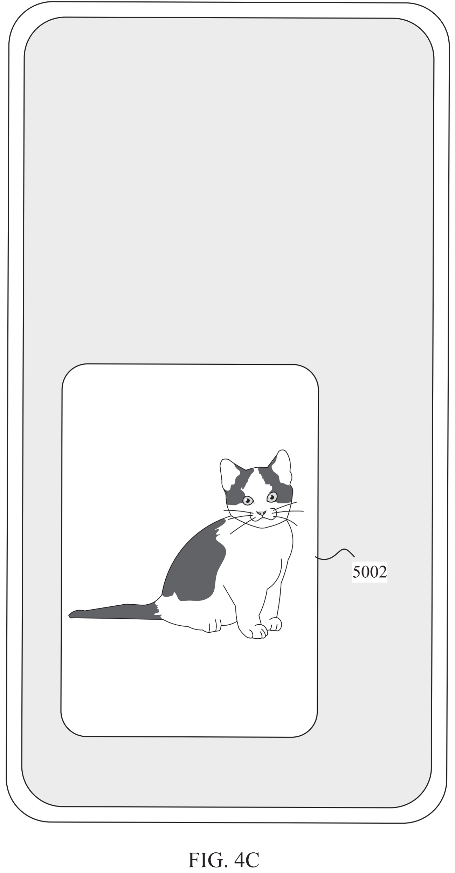

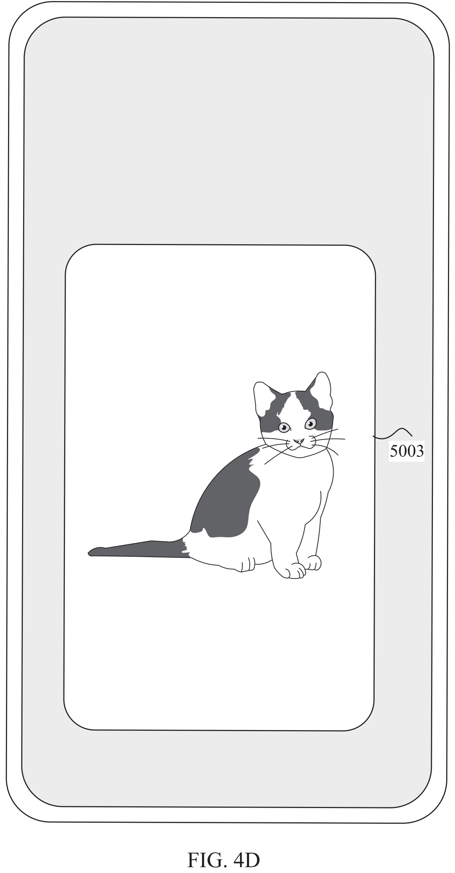

For example, after the camera application completes playing the animation frame 5002 shown in FIG. 4C, the drawing and the rendering of the large-image preview interface are completed. In this case, the camera application cannot play the animation frame 5003 shown in FIG. 4D or the animation frame 5004 shown in FIG. 4E. If the electronic device 100 directly switches to displaying the large-image preview interface of the gallery application without continuing to play the animation frame 5003 or the animation frame 5004, the user visually feels an abrupt transition from the animation frame 5002 to a large-image preview interface similar to that shown in FIG. 4E. Image content of the animation frame 5002 greatly differs from that of the large-image preview interface, causing an abrupt transition of image content and unnatural switching to the user.

To avoid this case, when the drawing and the rendering of the large-image preview interface are completed but the playing of the first switching animation is not completed, the camera application cannot play a remaining animation frame. To ensure that a remaining animation frame in the first switching animation can be played to enable the electronic device 100 to naturally and smoothly switch from the first switching animation to displaying the large-image preview interface of the gallery application, the gallery application may continue to draw and play the remaining animation frame, to ensure that the electronic device 100 naturally and smoothly jumps from the camera application to the gallery application and displays the large-image preview interface of the gallery application.

For example, the gallery application may obtain animation elements and animation parameters of the (m+1)^{th} animation frame to the n^{th} animation frame in the first switching animation, draw and render the (m+1)^{th} animation frame to the n^{th} animation frame in the first switching animation, and play the (m+1)^{th} animation frame to the n^{th} animation frame in the first switching animation.

For example, m may be 2, and n may be 4. In this case, the animation frame 5001 shown in FIG. 4B and the animation frame 5002 shown in FIG. 4C are drawn and played by the camera application, and the animation frame 5003 shown in FIG. 4D and the animation frame 5004 shown in FIG. 4E are drawn and played by the gallery application, to ensure that the electronic device 100 smoothly jumps from the camera application to the gallery application and displays the large-image preview interface of the gallery application.

S515: The gallery application displays the large-image preview interface of the gallery application.

When it is determined that the playing of the first switching animation is completed, all of the animation frame 5001 shown in FIG. 4B, the animation frame 5002 shown in FIG. 4C, the animation frame 5003 shown in FIG. 4D, and the animation frame 5004 shown in FIG. 4E are drawn and played by the camera application. The gallery application may directly display the large-image preview interface of the gallery application. For example, the gallery application may display a user interface similar to that shown in FIG. 4E. In this case, a moment at which the camera application completes playing the first switching animation may be the same as a moment at which the gallery application completes drawing and rendering the large-image preview interface, or a moment at which the camera application completes playing the first switching animation may be earlier than a moment at which the gallery application completes drawing and rendering the large-image preview interface.

In S512, after the gallery application completes playing the unplayed animation frame in the first switching animation, to be specific, after the gallery application completes playing the (m+1)^{th} animation frame to the n^{th} animation frame in the first switching animation, the gallery application may display the large-image preview interface of the gallery application. For example, the gallery application may display a user interface similar to that shown in FIG. 4E. In this case, a moment at which the camera application completes playing the first switching animation is later than a moment at which the gallery application completes drawing and rendering the large-image preview interface.

Optionally, image content of the large-image preview interface of the gallery application may be the same as image content of the last animation frame in the first switching animation. For example, the large-image preview interface of the gallery application may alternatively be an interface that displays the animation frame 5004, and the large-image preview interface does not include one or more editing options. A reason lies in: When the drawing and the rendering of the large-image preview interface are completed, the gallery application determines that the playing of the first switching animation is also completed. If the moment at which the camera application completes playing the first switching animation is earlier than the moment at which the gallery application completes drawing and rendering the large-image preview interface, the camera application needs to suspend displaying the last animation frame in the first switching animation, until the drawing and the rendering of the large-image preview interface are completed, and then the electronic device 100 switches to displaying the large-image preview interface of the gallery application. If the image content of the last animation frame in the first switching animation greatly differs from the image content of the large-image preview interface of the gallery application, the user visually experiences an abrupt image transition and frame freezing, and user experience is poor. In view of this, the image content of the last animation frame in the first switching animation may be set to be the same as the image content of the large-image preview interface of the gallery application. When the moment at which the camera application completes playing the first switching animation is earlier than the moment at which the gallery application completes drawing and rendering the large-image preview interface, the user does not perceive image switching, so that user experience is improved. Optionally, the image content includes but is not limited to a picture, a picture size, picture transparency, and the like.

Optionally, the large-image preview interface of the gallery application includes only a picture, for example, a picture shown in FIG. 4E. The picture may be an original image corresponding to the thumbnail displayed in the review control 104 in FIG. 4A. The large-image preview interface of the gallery application does not include one or more editing options, so that the electronic device 100 can naturally switch from the first switching animation to displaying the large-image preview interface of the gallery application.

In some embodiments, after the electronic device 100 displays the large-image preview interface of the gallery application, the electronic device 100 may receive an input operation, for example, tapping, of the user on the large-image preview interface, so that the electronic device 100 displays a large-image editing interface of the gallery application. The large-image editing interface includes one or more editing options, and the user may perform, on the large-image editing interface, an operation, for example, editing or sharing, on a displayed picture.

For example, as shown in FIG. 4E, the electronic device 100 may receive an input operation, for example, tapping, of the user on the large-image preview interface. In response to the input operation of the user, the electronic device 100 may display a user interface 5005 shown in FIG. 4F. The user interface 5005 includes a picture 5006, and the picture 5006 may be the original image corresponding to the thumbnail displayed in the review control 104 in FIG. 4A.

As shown in FIG. 4F, the user interface 5005 not only includes the picture 5006, but also includes a plurality of picture editing options, for example, a Back option 5007, a Share option 5012, a Favorites option 5008, an Edit option 5009, a Delete option 5010, and a More option 5011. The user may re-jump, by using the Back option 5007, to displaying the image shooting preview interface of the camera application. The user may share the picture 5006 to another application on the electronic device 100 or to another electronic device by using the Share option 5012. The user may save the picture 5006 to a favorites folder on the electronic device 100 by using the Favorites option 5008. The user may edit, for example, crop, rotate, or add a filter and a special effect to, the picture 5006 by using the Edit option 5009. The user may delete, by using the Delete option 5010, the picture 5006 saved in the gallery application. The user may perform more other operations on the picture 5006 by using the More option 5011.

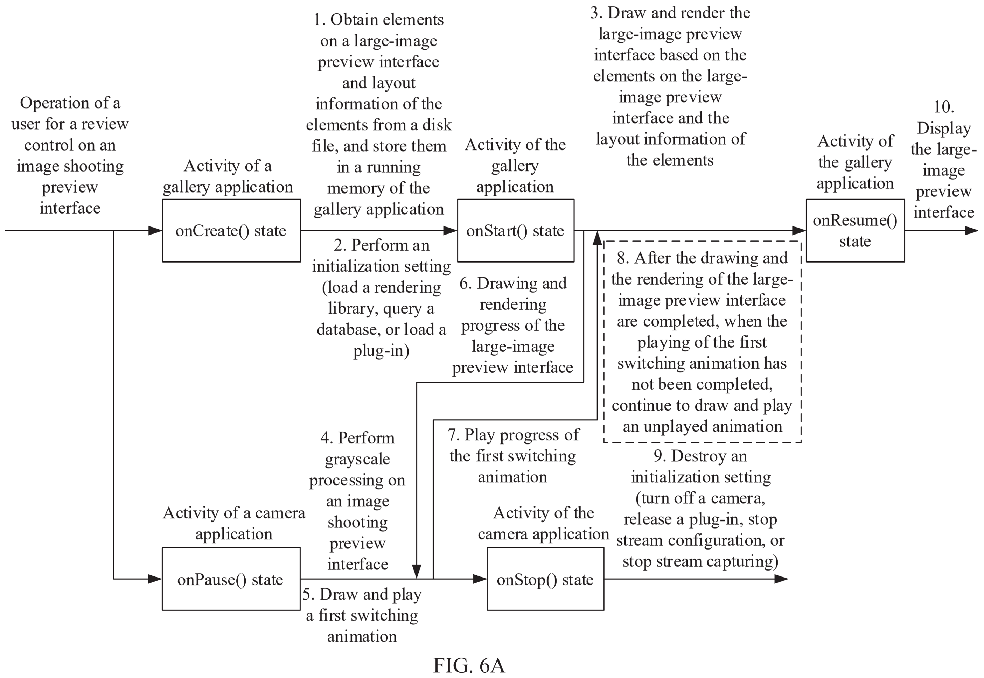

FIG. 6A is a diagram of a state change process in a lifecycle of an activity of a camera application and a lifecycle of an activity of a gallery application during jumping from the camera application to the gallery application.

In a possible implementation, in the case of jumping from the camera application to the gallery application, if the gallery application has not been started, an electronic device 100 needs to create and obtain the activity of the gallery application.

In this case, as shown in FIG. 3A, the electronic device 100 creates and initializes the activity of the gallery application in response to an input operation, for example, tapping, of a user for a review control on an image shooting preview interface. The activity of the gallery application needs to be in an onCreate() state. When the activity of the gallery application is in the onCreate() state, the gallery application further needs to obtain elements on a large-image preview interface and layout information of the elements from a disk file, and store the elements on the large-image preview interface and the layout information of the elements in a running memory of the gallery application. The large-image preview interface is a to-be-displayed user interface of the gallery application, for example, a user interface 5005 shown in FIG. 4F. For example, the elements on the large-image preview interface may be a plurality of elements displayed on the user interface 5005 shown in FIG. 4F.

When the activity of the gallery application is in the onCreate() state, the gallery application further needs to perform an initialization setting, for example, perform an operation of loading a rendering library, querying a database, or loading a plug-in, so that the gallery application can run normally and implement a related function.

After the initialization setting of the camera application is completed, the activity of the gallery application may switch from the onCreate() state to an onStart() state. When the activity of the gallery application is in the onStart() state, the gallery application may perform drawing and rendering based on the elements on the large-image shooting preview interface and the layout information of the elements, to obtain the large-image preview interface.

Optionally, when the activity of the gallery application is in the onStart() state, the gallery application further needs to send a drawing and rendering progress of the large-image preview interface to the camera application. In a possible implementation, the drawing and rendering progress of the large-image preview interface may be a large-image preview interface drawing and rendering completion message. After the gallery application completes drawing and rendering the large-image preview interface, the gallery application sends the large-image preview interface drawing and rendering completion message to the camera application. In another possible implementation, the drawing and rendering progress of the large-image preview interface carries a large-image preview interface drawing and rendering completion or non-completion message. The drawing and rendering progress of the large-image preview interface may be sent to the camera application irregularly, periodically, or at a specific interval.

In this application, in response to the input operation, for example, tapping, of the user for the review control on the image shooting preview interface, the activity of the camera application further needs to enter an onPause() state from an onResume() state. When the activity of the camera application is in the onPause() state, the camera application needs to perform grayscale processing on the image shooting preview interface, so that the camera application no longer responds to various tap operations, slide operations, or the like of the user on the image shooting preview interface. The camera application further needs to draw and play a first switching animation, and wait for the gallery application to complete drawing and rendering the large-image preview interface. The activity of the camera application needs to remain in the onPause() state until the gallery application completes drawing and rendering the large-image preview interface. Then the activity of the camera application enters a next state.

Optionally, when the activity of the camera application is in the onPause() state, the camera application may bind a specific service in the camera application to a callback for the onCreate() state of the activity of the gallery application. A reason lies in: The callback for the onCreate() state of the activity of the gallery application is in a foreground running state. Binding the specific service in the camera application to the callback for the onCreate() state of the activity of the gallery application enables the electronic device 100 to consider that the camera application is also running in the foreground. This ensures that a CPU scheduling priority of the camera application is not lowered. In this way, the camera application may draw and render a plurality of animation frames in the first switching animation in a timely manner, to avoid frame loss and frame freezing.

Optionally, when the activity of the camera application is in the onPause() state, the camera application may further perform another operation. This is not limited in this application.

Step 5 and step 3 shown in FIG. 6A may be performed simultaneously, or step 5 may be performed before step 3. Step 5 is performed without waiting until step 3 is completed.

In FIG. 6A, after the gallery application obtains the large-image preview interface through drawing and rendering, the activity of the camera application may switch from the onPause() state to an onStop() state. When the activity of the camera application is in the onStop() state, the camera application needs to destroy an initialization setting, for example, perform an operation of turning off a camera, releasing a plug-in, stopping stream configuration, or stopping stream capturing, to reduce power consumption of the electronic device 100.

After determining that the large-image preview interface is drawn and rendered, the camera application may send a play progress of the first switching animation to the gallery application, so that the gallery application determines whether to continue to play the first switching animation.

Optionally, when the activity of the camera application is in the onStop() state, if the playing of the first switching animation has not been completed, the gallery application still needs to stop playing the first switching animation.

When the activity of the camera application is in the onStop() state, the image shooting preview interface of the camera application is invisible.

Optionally, if the playing of the first switching animation is not completed after the gallery application completes drawing and rendering the large-image preview interface, for naturally and smoothly switching to the large-image preview interface of the gallery application, after the camera application stops playing the first switching animation, the gallery application needs to continue to draw and play an unplayed animation frame until completes playing the first switching animation. Then the activity of the gallery application switches to an onResume() state. Then the gallery application displays the large-image preview interface in a window provided by the activity of the gallery application, for example, displays a user interface similar to that shown in FIG. 4E.

In FIG. 6A, after the gallery application obtains the large-image preview interface through drawing and rendering and the playing of the first switching animation is completed, the activity of the gallery application may switch from the onStart() state to the onResume() state, and the gallery application does not need to continue to play the first switching animation. When the activity of the gallery application is in the onResume() state, the gallery application may display the large-image preview interface in a window provided by the activity of the gallery application, for example, display a user interface similar to that shown in FIG. 4E.

It should be noted that sequence numbers of steps in FIG. 6A do not represent an execution sequence of the steps, and an execution sequence of the steps in FIG. 6A is not limited in this application.

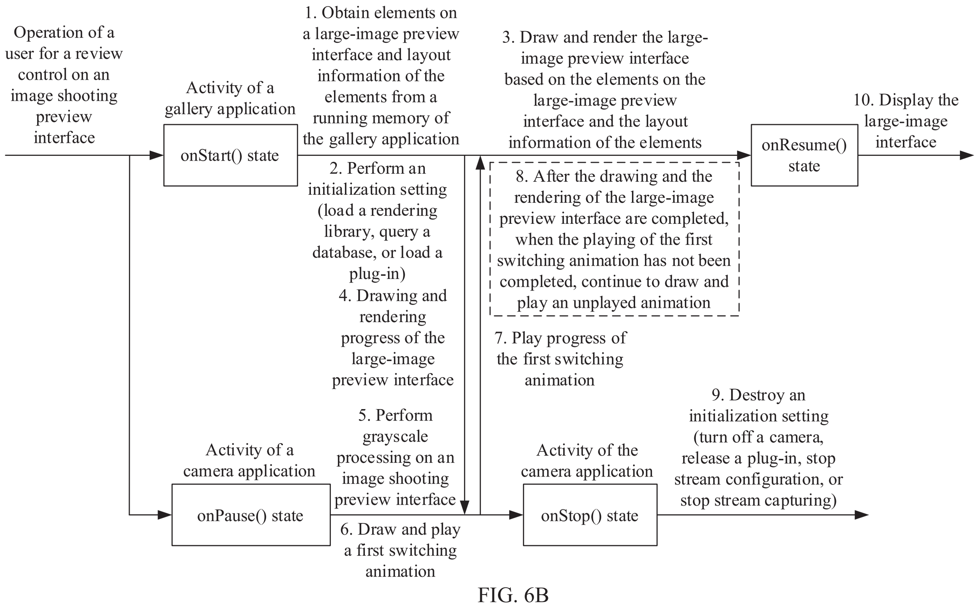

FIG. 6B is a diagram of another state change process in a lifecycle of an activity of a camera application and a lifecycle of an activity of a gallery application during jumping from the camera application to the gallery application.

In a possible implementation, in the case of jumping from the camera application to the gallery application, if the gallery application has been started, an electronic device 100 directly obtains the activity of the gallery application without creating the activity of the gallery application.

In this case, as shown in FIG. 6B, in response to an input operation, for example, tapping, of a user for a review control on an image shooting preview interface, the activity of the gallery application needs to be in an onStart() state. The activity of the gallery application re-enters the onStart() state from an onStop() state. When the activity of the gallery application is in the onStart() state, the gallery application may obtain elements on a large-image preview interface and layout information of the elements from a running memory of the gallery application. The large-image preview interface is a to-be-displayed user interface of the gallery application, for example, a user interface 5005 shown in FIG. 4F. For example, the elements on the large-image preview interface may be a plurality of elements displayed on the user interface 5005 shown in FIG. 4F.

When the activity of the gallery application is in the onStart() state, the gallery application further needs to perform an initialization setting, for example, perform an operation of loading a rendering library, querying a database, or loading a plug-in, so that the gallery application can run normally and implement a related function.

When the activity of the gallery application is in the onStart() state, the gallery application may perform drawing and rendering based on the elements on the large-image shooting preview interface and the layout information of the elements, to obtain the large-image preview interface.

Optionally, when the activity of the gallery application is in the onStart() state, the gallery application further needs to send a drawing and rendering progress of the large-image preview interface to the camera application. In a possible implementation, the drawing and rendering progress of the large-image preview interface may be a large-image preview interface drawing and rendering completion message. After the gallery application completes drawing and rendering the large-image preview interface, the gallery application sends the large-image preview interface drawing and rendering completion message to the camera application. In another possible implementation, the drawing and rendering progress of the large-image preview interface carries a large-image preview interface drawing and rendering completion or non-completion message. The drawing and rendering progress of the large-image preview interface may be sent to the camera application irregularly, periodically, or at a specific interval.

In this application, in response to the input operation, for example, tapping, of the user for the review control on the image shooting preview interface, the activity of the camera application further needs to enter an onPause() state from an onResume() state. When the activity of the camera application is in the onPause() state, the camera application needs to perform grayscale processing on the image shooting preview interface, so that the camera application no longer responds to various tap operations, slide operations, or the like of the user on the image shooting preview interface. The camera application further needs to draw and play a first switching animation, and wait for the gallery application to complete drawing and rendering the large-image preview interface. The activity of the camera application needs to remain in the onPause() state until the gallery application completes drawing and rendering the large-image preview interface. Then the activity of the camera application enters a next state.

Optionally, when the activity of the camera application is in the onPause() state, the camera application may bind a specific service in the camera application to a callback for the onCreate() state of the activity of the gallery application. A reason lies in: The callback for the onCreate() state of the activity of the gallery application is in a foreground running state. Binding the specific service in the camera application to the callback for the onCreate() state of the activity of the gallery application enables the electronic device 100 to consider that the camera application is also running in the foreground. This ensures that a CPU scheduling priority of the camera application is not lowered. In this way, the camera application may draw and render a plurality of animation frames in the first switching animation in a timely manner, to avoid frame loss and frame freezing.

Optionally, when the activity of the camera application is in the onPause() state, the camera application may further perform another operation. This is not limited in this application.

Step 5 and step 3 shown in FIG. 6B may be performed simultaneously, or step 5 may be performed before step 3. Step 5 is performed without waiting until step 3 is completed.

In FIG. 6B, after the gallery application obtains the large-image preview interface through drawing and rendering, the activity of the camera application may switch from the onPause() state to an onStop() state. When the activity of the camera application is in the onStop() state, the camera application needs to destroy an initialization setting, for example, perform an operation of turning off a camera, releasing a plug-in, stopping stream configuration, or stopping stream capturing, to reduce power consumption of the electronic device 100.

After determining that the large-image preview interface is drawn and rendered, the camera application may send a play progress of the first switching animation to the gallery application, so that the gallery application determines whether to continue to play the first switching animation.

Optionally, when the activity of the camera application is in the onStop() state, if the playing of the first switching animation has not been completed, the camera application still needs to stop playing the first switching animation.

When the activity of the camera application is in the onStop() state, the image shooting preview interface of the camera application is invisible.

Optionally, if the playing of the first switching animation is not completed after the gallery application completes drawing and rendering the large-image preview interface, for naturally and smoothly switching to the large-image preview interface of the gallery application, after the camera application stops playing the first switching animation, the gallery application needs to continue to draw and play an unplayed animation frame until completes playing the first switching animation. Then the activity of the gallery application switches to an onResume() state. Then the gallery application displays the large-image preview interface in a window provided by the activity of the gallery application, for example, displays a user interface similar to that shown in FIG. 4E.

In FIG. 6B, after the gallery application obtains the large-image preview interface through drawing and rendering and the playing of the first switching animation is completed, the activity of the gallery application may switch from the onStart() state to the onResume() state. When the activity of the gallery application is in the onResume() state, the gallery application may display the large-image preview interface in a window provided by the activity of the gallery application, for example, display a user interface similar to that shown in FIG. 4E.

It should be noted that sequence numbers of steps in FIG. 6B do not represent an execution sequence of the steps, and an execution sequence of the steps in FIG. 6B is not limited in this application.

**3. Receive a user operation for jumping from a gallery application to a camera application, play a second switching animation, jump to the camera application, and display an image shooting preview interface.**

In some embodiments, after jumping from a camera application to a gallery application and displaying a large-image preview interface of the gallery application, the electronic device 100 may receive a user operation for jumping from the gallery application to the camera application.

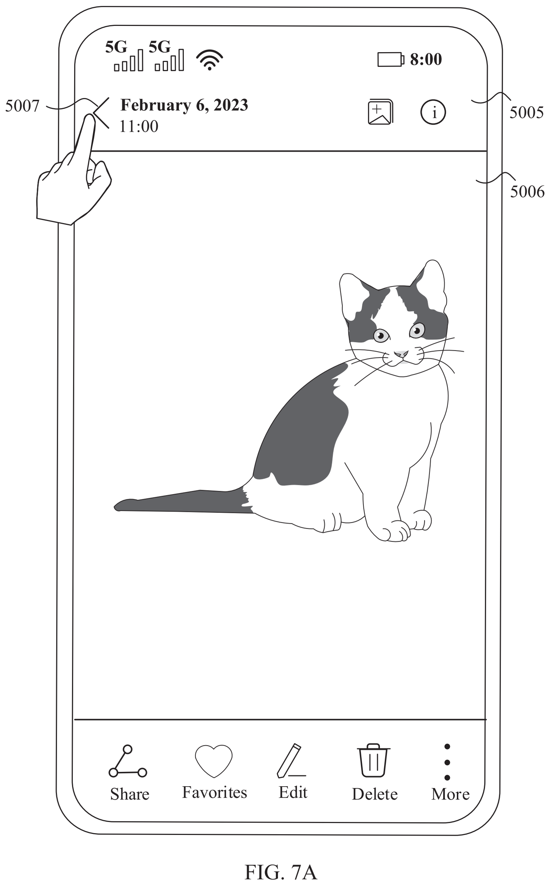

**FIG. 7A to FIG. 7G** **are diagrams of UIs on which an electronic device 100 receives a user operation for jumping to a camera application, jumps to the camera application, and displays an image shooting preview interface.**

In some embodiments, the electronic device 100 may receive a user operation of a user on a large-image editing interface of a gallery application, and jump to the camera application. For example, the user operation may be an operation of touching-and-holding a picture displayed on the large-image editing interface and sliding down, or an input operation, for example, tapping, for a Back option on the large-image editing interface.

Similar to the principle of jumping from the camera application to the gallery application, before jumping from the gallery application to the camera application, the electronic device 100 needs to wait for an activity of the camera application to be pulled up. The activity of the camera application needs to experience a plurality of states such as onStart() and onResume(). Each state includes a time-consuming operation. To improve visual experience of the user and reduce waiting duration of the user, the electronic device 100 may play a second switching animation before jumping to the camera application.

While playing the second switching animation, the electronic device 100 may obtain the activity of the camera application, and draw and render a to-be-displayed image shooting preview interface of the camera application.

In this way, playing the second switching animation, and drawing and rendering the to-be-displayed image shooting preview interface of the camera application may be performed simultaneously, to reduce waiting time of the user.

For example, as shown in FIG. 7A, the electronic device 100 may receive an input operation, for example, a tap operation, of the user for a Back option 5007. In response to the input operation of the user, the electronic device 100 may obtain an animation element and an animation parameter, draw and render an animation frame based on the animation element and the animation parameter to obtain a plurality of animation frames in the second switching animation, and play the plurality of animation frames in the second switching animation.

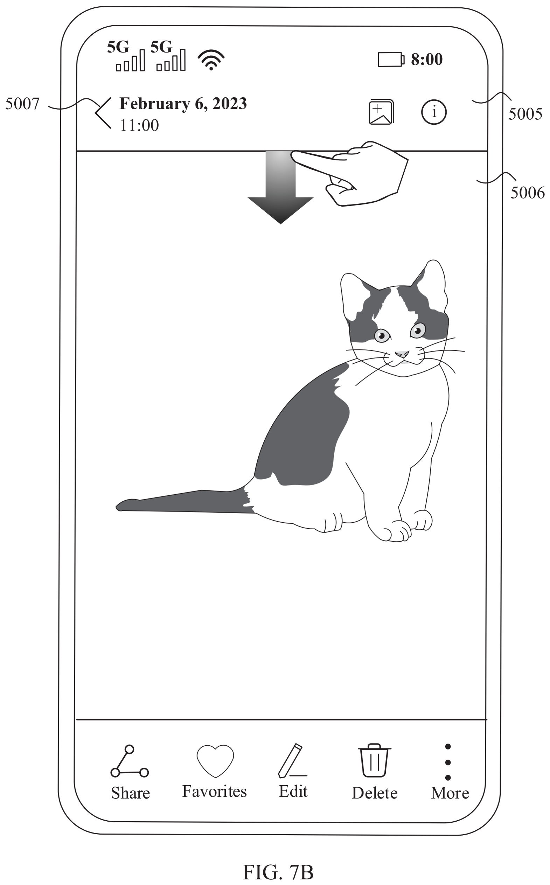

For example, as shown in FIG. 7B, the electronic device 100 may alternatively receive an input operation, for example, a touch-and-hold and slide-down operation, of the user for a picture 5006 on a user interface 5005. In response to the input operation of the user, the electronic device 100 may obtain an animation element and an animation parameter, draw and render an animation frame based on the animation element and the animation parameter to obtain a plurality of animation frames in the second switching animation, and play the plurality of animation frames in the second switching animation.

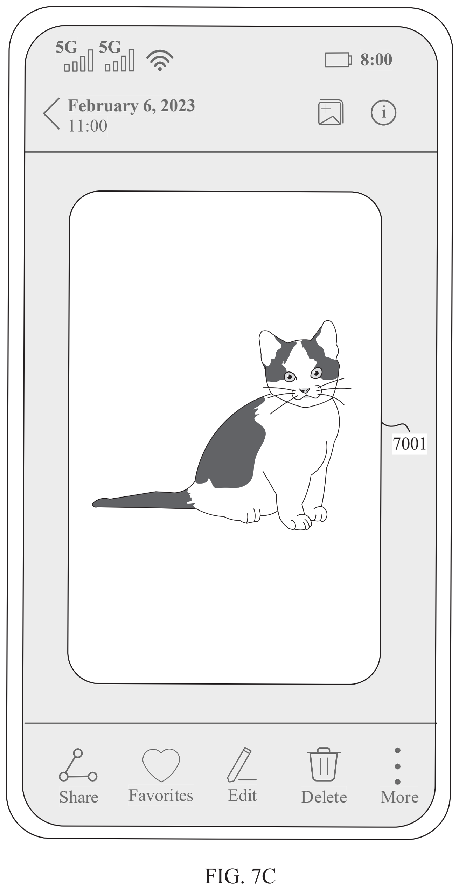

For example, as shown in FIG. 7C to FIG. 7F, the electronic device 100 may sequentially play an animation frame 7001, an animation frame 7002, an animation frame 7003, and an animation frame 7004 in the second switching animation.

It can be learned from the animation frame 7001, the animation frame 7002, the animation frame 7003, and the animation frame 7004 that the animation frame is obtained through zoom-out based on the picture 5006 on the user interface 5005. The animation element that may be obtained by the electronic device 100 may be the picture 5006 on the user interface 5005. The animation parameter may be a size of each animation frame, for example, a size of the animation frame 7001, a size of the animation frame 7002, a size of the animation frame 7003, or a size of the animation frame 7004. The size of the animation frame 7001 is greater than the size of the animation frame 7002, the size of the animation frame 7002 is greater than the size of the animation frame 7003, and the size of the animation frame 7003 is greater than the size of the animation frame 7004.

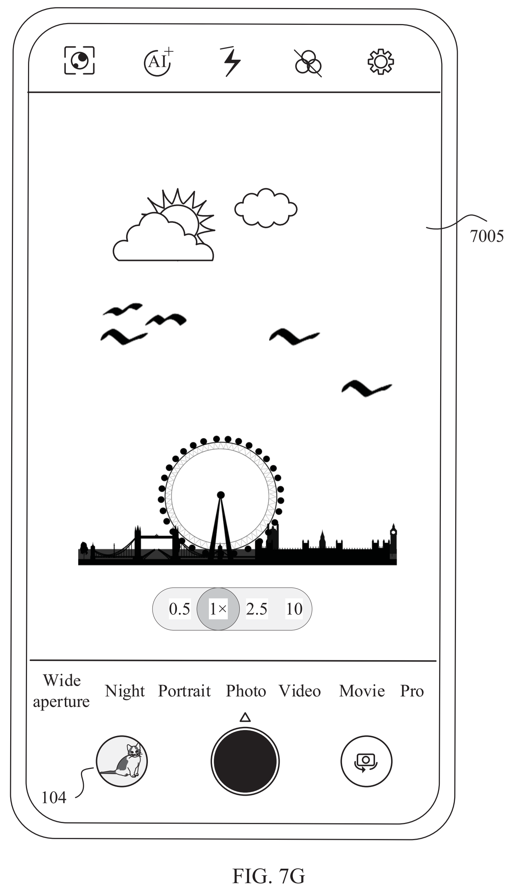

After the electronic device 100 completes playing the second switching animation, the electronic device 100 may switch to displaying the image shooting preview interface of the camera application. For example, the electronic device 100 may display a user interface 7005 shown in FIG. 7G. A preview image is displayed on the user interface 7005. The user interface 7005 may also be referred to as an image shooting preview interface of the camera application. The user interface 7005 is similar to a user interface shown in FIG. 1B. The user may select an image shooting mode, take a photo, or record a video on the user interface 7005, and select an image shooting function, adjust a focal length, or the like in a shortcut function area 105.

Optionally, transparency of backgrounds of animation frames shown in FIG. 7C to FIG. 7F may continuously decrease, until transparency of an animation frame is close to 0 and a background element of the animation frame is invisible. Then the electronic device 100 switches to displaying the image shooting preview interface of the camera application, to implement a natural and smooth transition to displaying the image shooting preview interface of the camera application.

Optionally, the gallery application may alternatively receive an operation of the user on a large-image preview interface, to jump to the camera application. For example, the operation may be a touch-and-hold and slide-down operation on the large-image preview interface. In this case, the second switching animation may include an animation frame 5003 shown in FIG. 4D, an animation frame 5002 shown in FIG. 4C, and an animation frame 5001 shown in FIG. 4B. After playing the animation frame 5001 shown in FIG. 4B, the electronic device 100 may display a user interface 7005 shown in FIG. 7G. A display style of the second switching animation is not limited in this application either.

Optionally, an image parameter of a last animation frame in the second switching animation may alternatively be the same as an image parameter of the image shooting preview interface, to avoid frame freezing. The image parameter includes but is not limited to image content, an image size, image transparency, and the like.

It should be noted that FIG. 7C to FIG. 7F show only a part of animation frames in the second switching animation, and the second switching animation may further include more other animation frames; and FIG. 7C to FIG. 7F also show only one display style of the second switching animation, and the second switching animation may alternatively be in another display style. This is not limited in this application.

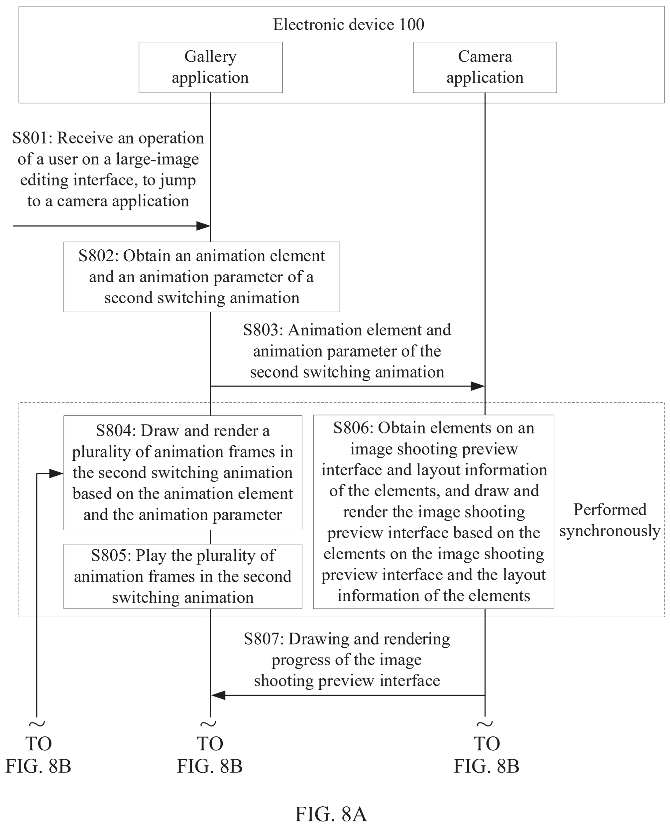

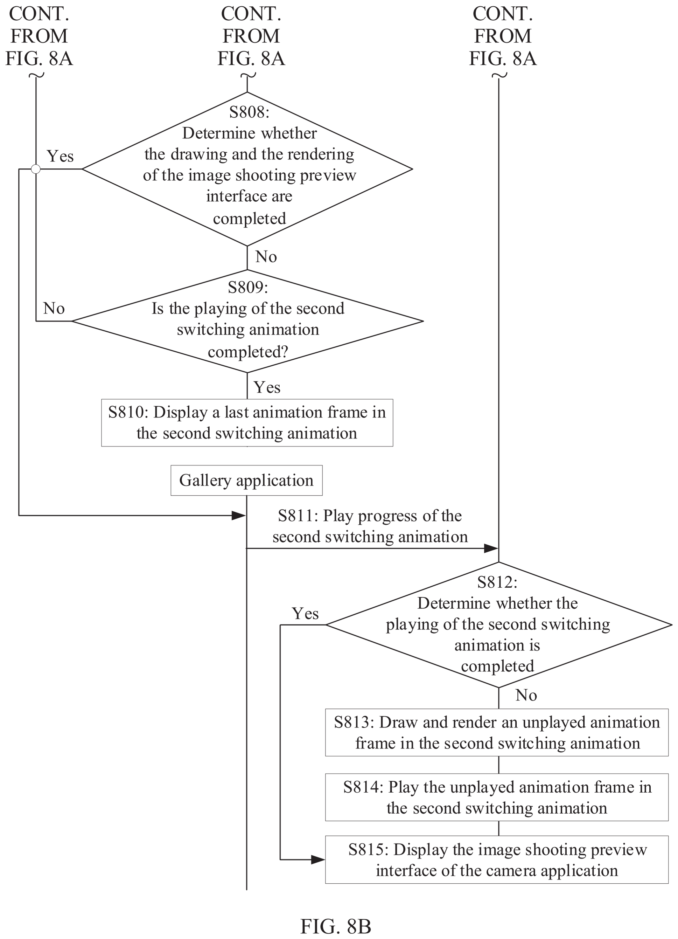

**FIG. 8A** **and** **FIG. 8B** **are a schematic flowchart of a specific implementation of a method for jumping from a gallery application to a camera application.**

S801: The gallery application receives an operation of a user on a large-image editing interface, to jump to the camera application.

In some embodiments, an electronic device 100 may receive the user operation of the user on the large-image editing interface of the gallery application, and jump to the camera application. For example, the operation may be an input operation for a Back option on the large-image editing interface, for example, an input operation, like a tap operation, for a Back option 5007 shown in FIG. 7A; or a touch-and-hold and slide-down operation for a picture displayed on the large-image editing interface, for example, an input operation, like a touch-and-hold and slide-down operation, for a picture 5006 on a user interface 5005 shown in FIG. 7B.

Optionally, the gallery application may alternatively receive an operation of the user on a large-image preview interface, to jump to the camera application. For example, the operation may be a touch-and-hold and slide-down operation on the large-image preview interface. In this case, a second switching animation may include an animation frame 5003 shown in FIG. 4D, an animation frame 5002 shown in FIG. 4C, and an animation frame 5001 shown in FIG. 4B. A display style of the second switching animation is not limited in this application either.

S802: The gallery application obtains an animation element and an animation parameter of the second switching animation.

The gallery application needs to wait for a period of time when jumping to the camera application. To improve user experience within the period of time of waiting for jumping, the gallery application may play the second switching animation, to improve visual experience of the user.

Before playing the second switching animation, the gallery application needs to obtain the animation element and the animation parameter of the second switching animation, and perform drawing and rendering based on the animation element and the animation parameter of the second switching animation to obtain a plurality of animation frames.

The animation element may be image content in an animation frame. The animation parameter may include but is not limited to the following information: a size, transparency, and a location of an animation frame, and the like. For example, the animation element may be the picture 5006 shown in FIG. 7A.

In a possible implementation, an animation element and an animation parameter that correspond to each animation frame in the second switching animation are prestored on the electronic device 100, and the gallery application may directly obtain, from the electronic device 100, the animation element and the animation parameter that correspond to each animation frame in the second switching animation.

In another possible implementation, the gallery application may alternatively calculate, in real time based on duration of the second switching animation, an animation parameter corresponding to each animation frame in the second switching animation. Optionally, the second switching animation may include preset duration, for example, 300 ms. The camera application may determine, based on display duration of each animation frame, a quantity of animation frames included in the second switching animation. For example, if the display duration of each animation frame is 50 ms, the second switching animation includes six animation frames. Then the animation parameter corresponding to each animation frame in the second switching animation is determined based on an animation parameter of an initial animation frame in the second switching animation, an animation parameter of an ending animation frame in the second switching animation, and the quantity of animation frames.

Optionally, animation elements in different animation frames may be the same or different. This is not limited in this application.

S803: The gallery application sends the animation element and the animation parameter of the second switching animation to the camera application.

After obtaining the animation element and the animation parameter of a switching animation, the gallery application further needs to send the animation element and the animation parameter of the second switching animation to the camera application. In this way, after the electronic device 100 jumps to the camera application, if the playing of the second switching animation has not been completed, the camera application may draw and render an unplayed animation frame based on the animation element and the animation parameter of the second switching animation, to ensure that the electronic device 100 can complete playing the second switching animation, and smoothly and naturally switch from the second switching animation to displaying an image shooting preview interface of the second application.

Optionally, S803 may be performed before, after, or simultaneously with any step before S813.

S804: The gallery application draws and renders a plurality of animation frames in the second switching animation based on the animation element and the animation parameter.

S805: The gallery application plays the plurality of animation frames in the second switching animation.

After obtaining the animation element and the animation parameter of the second switching animation, the gallery application may draw and render the plurality of animation frames in the second switching animation based on the animation element and the animation parameter, and play the plurality of animation frames in the second switching animation.

For example, the plurality of animation frames in the second switching animation may be an animation frame 7001, an animation frame 7002, an animation frame 7003, and an animation frame 7004 shown in FIG. 7C to FIG. 7F.

In some embodiments, in response to the operation of the user on the large-image preview interface, the electronic device 100 determines that the current user operation is a user operation for jumping to the camera application. The electronic device 100 may determine that the gallery application is to run in the background and the camera application is to run in the foreground. According to a principle that a priority of foreground running is higher than a priority of background running, the electronic device 100 may lower a CPU scheduling priority of the gallery application. After the CPU scheduling priority of the gallery application is lowered, the gallery application may be unable to draw and render the plurality of animation frames in the second switching animation in a timely manner, leading to frame loss. To ensure that the gallery application normally draws and renders the plurality of animation frames in the second switching animation without frame loss, that is, to ensure that the CPU scheduling priority of the camera application is not lowered, the gallery application may be bound to a callback for an onStart() state of an activity of the camera application. A reason lies in: The callback for the onStart() state of the activity of the camera application is in a foreground running state. Binding a specific service in the gallery application to the callback for the onStart() state of the activity of the camera application enables the electronic device 100 to consider that the gallery application is also running in the foreground. This ensures that the CPU scheduling priority of the gallery application is not lowered.

Optionally, the specific service may be an empty service used for jumping from the gallery application to the camera application.

S806: The camera application obtains elements on an image shooting preview interface and layout information of the elements, and draws and renders the image shooting preview interface based on the elements on the image shooting preview interface and the layout information of the elements.

Optionally, S806, S804, and S805 may be performed in parallel. Alternatively, S806 is performed at a moment before S804, or S806 is performed at a moment after S804. This is not limited in this application.

According to the method, after detecting the user operation for jumping to the camera application, the electronic device 100 may simultaneously play the second switching animation and draw and render the to-be-displayed image shooting preview interface of the camera application. The second switching animation is played without waiting until the drawing and the rendering of the to-be-displayed image shooting preview interface of the camera application are completed. This shortens a delay of playing the second switching animation by the electronic device 100, addresses slow response of the electronic device 100 to the user operation for jumping to the camera application, reduces waiting time of the user, and improves visual experience of the user.

In response to the operation of the user on the large-image preview interface, the camera application may obtain the elements on the image shooting preview interface and the layout information of the elements, and draws and renders the image shooting preview interface based on the elements on the image shooting preview interface and the layout information of the elements.

Because the camera application is already started and runs in the background, the activity of the camera application already exists, and the electronic device 100 directly obtains the activity of the camera application, without creating the activity of the camera application. The camera application may directly obtain the elements on the image shooting preview interface and the layout information of the elements from a running memory of the camera application.

S807: The camera application sends a drawing and rendering progress of the image shooting preview interface to the gallery application.

Optionally, the drawing and rendering progress of the image shooting preview interface may be an image shooting preview interface drawing and rendering completion message. After the camera application completes drawing and rendering the image shooting preview interface, the camera application sends the image shooting preview interface drawing and rendering completion message to the gallery application.

Optionally, the drawing and rendering progress of the image shooting preview interface carries an image shooting preview interface drawing and rendering completion or non-completion message. S807 may be performed irregularly, periodically, or at a specific interval, or S807 may be performed after the drawing and the rendering of the image shooting preview interface are completed.

S808: The gallery application needs to determine whether the drawing and the rendering of the image shooting preview interface are completed.

While playing the second switching animation, the gallery application needs to determine whether the drawing and the rendering of the image shooting preview interface of the camera application are completed.

Optionally, the gallery application may determine, based on the drawing and rendering progress of the large-image preview interface that is sent by the camera application, whether the drawing and the rendering of the large-image preview interface are completed.

When the drawing and rendering progress of the large-image preview interface may be the image shooting preview interface drawing and rendering completion message, if the gallery application receives no drawing and rendering progress of the image shooting preview interface that is sent by the camera application, the gallery application may determine that the drawing and the rendering of the image shooting preview interface are not completed; or if receiving the drawing and rendering progress of the image shooting preview interface that is sent by the camera application, the gallery application may determine that the drawing and the rendering of the image shooting preview interface are completed.

When the drawing and rendering progress of the image shooting preview interface carries the image shooting preview interface drawing and rendering completion or non-completion message, after receiving the drawing and rendering progress of the image shooting preview interface, the gallery application may determine, based on the image shooting preview interface drawing and rendering completion message carried in the drawing and rendering progress of the image shooting preview interface, that the drawing and the rendering of the image shooting preview interface are completed.

After the drawing and the rendering of the image shooting preview interface of the camera application are completed, the gallery application needs to stop drawing and playing the second switching animation.

When the drawing and the rendering of the image shooting preview interface of the camera application are not completed, the gallery application may continue playing the second switching animation until the image shooting preview interface of the camera application is completed, and then the gallery application stops drawing and playing the second switching animation.

When determining that the drawing and the rendering of the image shooting preview interface are completed, the camera application performs S811.

When determining that the drawing and the rendering of the image shooting preview interface are not completed, the camera application performs S804.

S809: The gallery application needs to determine whether the playing of the second switching animation is completed.

When the gallery application determines that the drawing and the rendering of the image shooting preview interface are not completed, the gallery application needs to determine whether the playing of the second switching animation is completed, and determine whether to continue playing the second switching animation or display a last animation frame in the second switching animation.

When determining that the drawing and the rendering of the image shooting preview interface are not completed and the playing of the second switching animation is not completed, the gallery application needs to continue to draw and render an unplayed animation frame in the second switching animation, and play the unplayed animation frame in the second switching animation, that is, the gallery application performs 8 and S805.

When determining that the drawing and the rendering of the image shooting preview interface are not completed but the playing of the second switching animation is completed, the gallery application needs to display the last animation frame in the second switching animation, that is, the camera application performs S810.

S810: The gallery application displays the last animation frame in the second switching animation.

For example, the last animation frame in the second switching animation may be an animation frame 5004 shown in FIG. 4E.

S811: The gallery application sends a play progress of the second switching animation to the camera application.

S812: The camera application needs to determine whether the playing of the second switching animation is completed.

When determining that the drawing and the rendering of the image shooting preview interface are completed, the gallery application stops playing an animation frame in the second switching animation, and sends the play progress of the second switching animation to the camera application.

The play progress of the second switching animation may be that the gallery application has played an m^{th} animation frame in the second switching animation, where the second switching animation includes n animation frames, and m is less than or equal to n.

After the camera application receives the play progress of the second switching animation that is sent by the gallery application, the camera application needs to determine whether the playing of the second switching animation is completed.

m being equal to n indicates that the gallery application has completed playing the second switching animation, and S815 is to be performed.

m being less than n indicates that the gallery application has not completed playing the second switching animation, and playing of an (m+1)^{th} animation frame to an n^{th} animation frame in the second switching animation has not been completed. The camera application continues to play the (m+1)^{th} animation frame to the n^{th} animation frame in the second switching animation. S813 is to be performed.

When determining that the drawing and the rendering of the image shooting preview interface of the camera application are completed, in addition to stopping drawing and playing the second switching animation, the gallery application further needs to destroy an initialization setting, for example, perform an operation of releasing a rendering library, stopping querying a database, or releasing a plug-in, to reduce power consumption of the electronic device 100.

To destroy the initialization setting, the gallery application needs to preempt a CPU resource. If the gallery application destroys the initialization setting while drawing and playing the second switching animation, the gallery application may fail to schedule a CPU resource in a timely manner to draw and render an animation frame, leading to frame freezing due to frame loss. According to the method, the gallery application destroys the initialization setting only when determining that the drawing and the rendering of the image shooting preview interface of the camera application are completed, to avoid a case that frame freezing occurs due to frame loss when the gallery application plays the second switching animation.

In another embodiment, destroying the initialization setting by the gallery application may alternatively be performed simultaneously with playing the second switching animation by the gallery application, or destroying the initialization setting by the gallery application may be performed before playing the second switching animation by the gallery application. This is not limited in this application.

S813: The camera application draws and renders an unplayed animation frame in the second switching animation.

S814: The camera application plays the unplayed animation frame in the second switching animation.

When determining that the playing of the second switching animation is not completed, the camera application may draw and render an unplayed animation frame in the second switching animation based on an obtained animation element and animation parameter of the unplayed animation frame, and play the unplayed animation frame in the second switching animation.

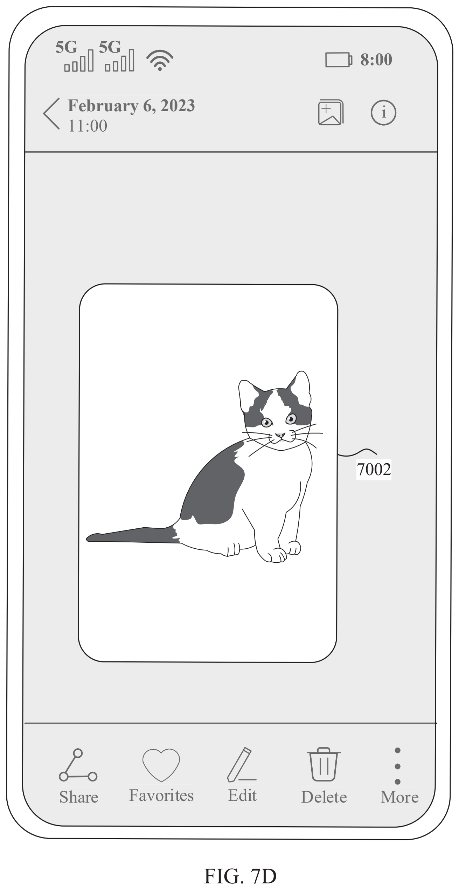

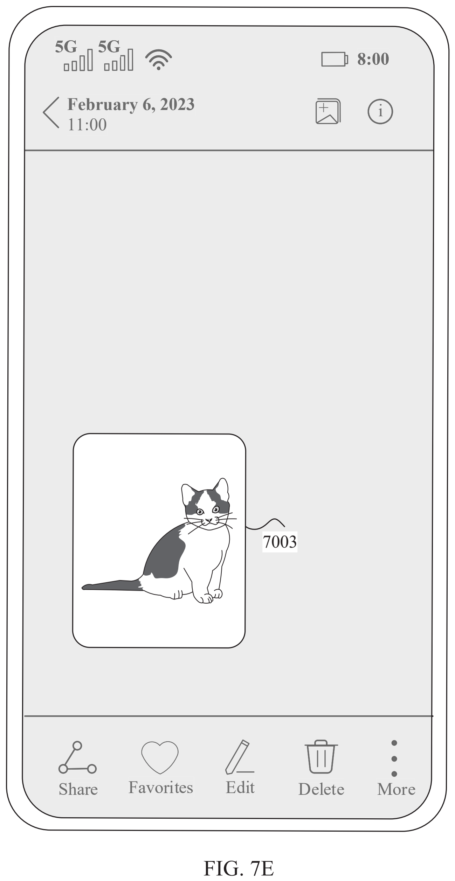

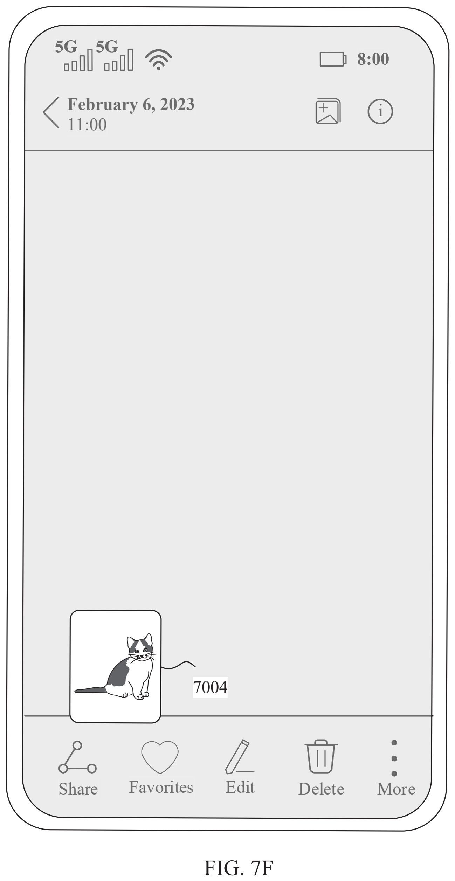

For example, after the gallery application completes playing the animation frame 7002 shown in FIG. 7D, the drawing and the rendering of the image shooting preview interface are completed. In this case, the gallery application cannot continue to play the animation frame 7003 shown in FIG. 7E or the animation frame 7004 shown in FIG. 7F. If the electronic device 100 directly switches to displaying a user interface 7005 shown in FIG. 7G without continuing to play the animation frame 7003 or the animation frame 7004, the user visually feels an abrupt transition from the animation frame 7002 to the display of the user interface 7005. Image content of the animation frame 7002 greatly differs from that of the user interface 7005, causing an abrupt transition of image content and unnatural switching to the user.

To avoid this case, when the drawing and the rendering of the image shooting preview interface are completed but the playing of the second switching animation is not completed, the gallery application cannot play a remaining animation frame. To ensure that a remaining animation frame in the second switching animation can be played to enable the electronic device 100 to naturally and smoothly switch from the second switching animation to displaying the image shooting preview interface of the camera application, the camera application may continue to draw and play the remaining animation frame, to ensure that the electronic device 100 naturally and smoothly jumps from the gallery application to the camera application and displays the image shooting preview interface of the camera application.

For example, the camera application may obtain animation elements and animation parameters of the (m+1)^{th} animation frame to the n^{th} animation frame in the second switching animation, draw and render the (m+1)^{th} animation frame to the n^{th} animation frame in the second switching animation, and play the (m+1)^{th} animation frame to the n^{th} animation frame in the second switching animation.

For example, m may be 2, and n may be 4. In this case, the animation frame 7001 shown in FIG. 7C and the animation frame 7002 shown in FIG. 7D are drawn and played by the gallery application, and the animation frame 7003 shown in FIG. 7E and the animation frame 7004 shown in FIG. 7F are drawn and played by the camera application, to ensure that the electronic device 100 smoothly jumps from the gallery application to the camera application and displays the image shooting preview interface of the camera application.

S815: The camera application displays the image shooting preview interface of the camera application.

When it is determined that the playing of the second switching animation is completed, all of the animation frame 7001 shown in FIG. 7C, the animation frame 7002 shown in FIG. 7D, the animation frame 7003 shown in FIG. 7E, and the animation frame 7004 shown in FIG. 7F are drawn and played by the gallery application. The camera application may directly display the large-image preview interface of the gallery application. For example, the camera application may display the user interface 7005 shown in FIG. 7G. In this case, a moment at which the gallery application completes playing the second switching animation may be the same as a moment at which the camera application completes drawing and rendering the image shooting preview interface, or a moment at which the gallery application completes playing the second switching animation may be earlier than a moment at which the camera application completes drawing and rendering the image shooting preview interface.

In S812, after the camera application completes playing the unplayed animation frame in the second switching animation, to be specific, after the camera application completes playing the (m+1)^{th} animation frame to the n^{th} animation frame in the second switching animation, the camera application may display the image shooting preview interface. For example, the camera application may display the user interface 7005 shown in FIG. 7G. In this case, a moment at which the gallery application completes playing the second switching animation is later than a moment at which the camera application completes drawing and rendering the image shooting preview interface.

In some embodiments, image content of the last animation frame in the second switching animation is the same as image content of the image shooting preview interface of the camera application. The image content includes but is not limited to a picture, a picture size, picture transparency, and the like.

A reason lies in: When the drawing and the rendering of the image shooting preview interface are completed, the gallery application determines that the playing of the second switching animation is also completed. If the moment at which the gallery application completes playing the second switching animation is earlier than the moment at which the camera application completes drawing and rendering the image shooting preview interface, the gallery application needs to suspend displaying the last animation frame in the second switching animation, until the drawing and the rendering of the image shooting preview interface are completed, and then the electronic device 100 switches to displaying the image shooting preview interface of the camera application. If an image parameter of the last animation frame in the second switching animation greatly differs from an image parameter of the image shooting preview interface of the camera application, the user visually experiences an abrupt image transition and frame freezing, and user experience is poor. In view of this, the image parameter of the last animation frame in the first switching animation may be set to be the same as a parameter of the image content of the image shooting preview interface of the camera application. When the moment at which the gallery application completes playing the second switching animation is earlier than the moment at which the camera application completes drawing and rendering the image shooting preview interface, the user does not perceive image switching, so that user experience is improved.

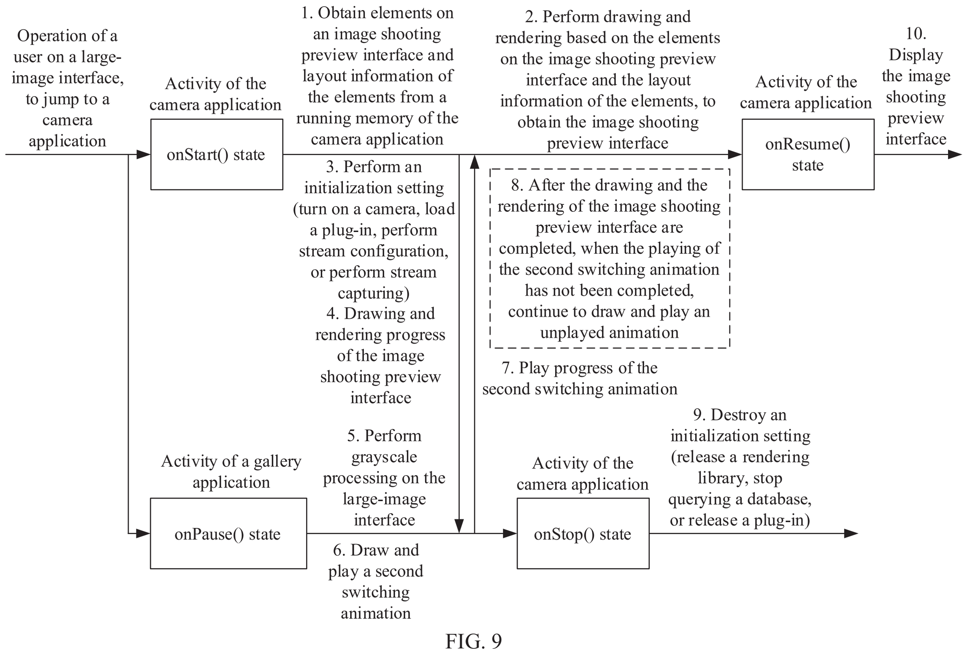

FIG. 9 is a diagram of a state change process in a lifecycle of an activity of a camera application and a lifecycle of an activity of a gallery application during jumping from the gallery application to the camera application.

In the case of jumping from the gallery application to the camera application, because the camera application is already started and runs in the background, the activity of the camera application already exists, and an electronic device 100 directly obtains the activity of the camera application, without creating the activity of the camera application.

In this case, as shown in FIG. 9, in response to an operation of a user on a large-image preview interface to jump to the camera application, the activity of the camera application needs to be in an onStart() state. The activity of the camera application re-enters the onStart() state from an onStop() state. When the activity of the camera application is in the onStart() state, the camera application may obtain elements on an image shooting preview interface and layout information of the elements from a running memory of the camera application. The image shooting preview interface is a to-be-displayed user interface of the camera application, for example, a user interface 7005 shown in FIG. 7G. For example, the elements on the image shooting preview interface may be a plurality of elements displayed on the user interface 7005.

When the activity of the camera application is in the onStart() state, the camera application further needs to perform an initialization setting, for example, perform an operation of turning on camera, loading a plug-in, performing stream configuration, or performing stream capturing, so that the gallery application can run normally and implement a related function.

When the activity of the camera application is in the onStart() state, the camera application may perform drawing and rendering based on the elements on the image shooting preview interface and the layout information of the elements, to obtain the image shooting preview interface.

Optionally, when the activity of the camera application is in the onStart() state, the camera application further needs to send a drawing and rendering progress of the image shooting preview interface to the gallery application. In a possible implementation, the drawing and rendering progress of the image shooting preview interface may be an image shooting preview interface drawing and rendering completion message. After the camera application completes drawing and rendering the image shooting preview interface, the camera application sends the image shooting preview interface drawing and rendering completion message to the camera application. In another possible implementation, the drawing and rendering progress of the image shooting preview interface carries an image shooting preview interface drawing and rendering completion or non-completion message. The drawing and rendering progress of the image shooting preview interface may be sent to the gallery application irregularly, periodically, or at a specific interval.

In this application, in response to the operation of the user on the large-image preview interface to jump to the camera application, the activity of the gallery application further needs to enter an onPause() state from an onResume() state. When the activity of the gallery application is in the onPause() state, the gallery application needs to perform grayscale processing on the large-image preview interface, so that the gallery application no longer responds to various tap operations, slide operations, or the like of the user on the large-image preview interface. The gallery application further needs to draw and play a second switching animation, and wait for the camera application to complete drawing and rendering the image shooting preview interface. The activity of the gallery application needs to remain in the onPause() state until the camera application completes drawing and rendering the image shooting preview interface. Then the activity of the gallery application enters a next state.

Optionally, when the activity of the gallery application is in the onPause() state, the gallery application may bind a specific service in the gallery application to a callback for the onStart() state of the activity of the camera application. A reason lies in: The callback for the onStart() state of the activity of the camera application is in a foreground running state. Binding the specific service in the gallery application to the callback for the onStart() state of the activity of the camera application enables the electronic device 100 to consider that the gallery application is also running in the foreground. This ensures that a CPU scheduling priority of the gallery application is not lowered. In this way, the gallery application may draw and render a plurality of animation frames in the second switching animation in a timely manner, to avoid frame loss and frame freezing.

Optionally, when the activity of the gallery application is in the onPause() state, the gallery application may further perform another operation. This is not limited in this application.

Optionally, step 2 and step 5 in FIG. 9 may be performed simultaneously, or step 2 may be performed before step 5. Step 5 is performed without waiting until step 2 is completed.

In FIG. 9, after the camera application obtains the image shooting preview interface through drawing and rendering, the activity of the gallery application may switch from the onPause() state to an onStop() state. When the activity of the gallery application is in the onStop() state, the gallery application needs to destroy an initialization setting, for example, perform an operation of releasing a rendering library, stopping querying a database, or releasing a plug-in, to reduce power consumption of the electronic device 100.

After determining that the image shooting preview interface is drawn and rendered, the gallery application may send a play progress of the second switching animation to the camera application, so that the camera application determines whether to continue to play the second switching animation.

Optionally, when the activity of the gallery application is in the onStop() state, if the playing of the second switching animation has not been completed, the gallery application still needs to stop playing the second switching animation.

When the activity of the gallery application is in the onStop() state, the large-image preview interface of the gallery application is invisible.

Optionally, if the playing of the second switching animation in FIG. 7G is not completed after the camera application completes drawing and rendering the image shooting preview interface, for naturally and smoothly switching to the image shooting preview interface of the camera application, after the camera application stops playing the second switching animation, the camera application needs to continue to draw and play an unplayed animation frame until completes playing the second switching animation. Then the activity of the camera application switches to an onResume() state. Then the camera application displays the image shooting preview interface in a window provided by the activity of the camera application, for example, displays the user interface 7005.

In FIG. 9, after the camera application completes drawing and rendering the image shooting preview interface and the playing of the second switching animation is completed, the activity of the camera application may switch from the onStart() state to an onResume() state. When the activity of the camera application is in the onResume() state, the camera application may display the image shooting preview interface in a window provided by the activity of the camera application, for example, display the user interface 7005 shown in FIG. 7G.

It should be noted that sequence numbers of steps in FIG. 9 do not represent an execution sequence of the steps, and an execution sequence of the steps in FIG. 9 is not limited in this application.

**4. Close a camera application.**

In some embodiments, after an electronic device 100 receives a user operation to start a camera application, the electronic device 100 may also receive a user operation to close the camera application.

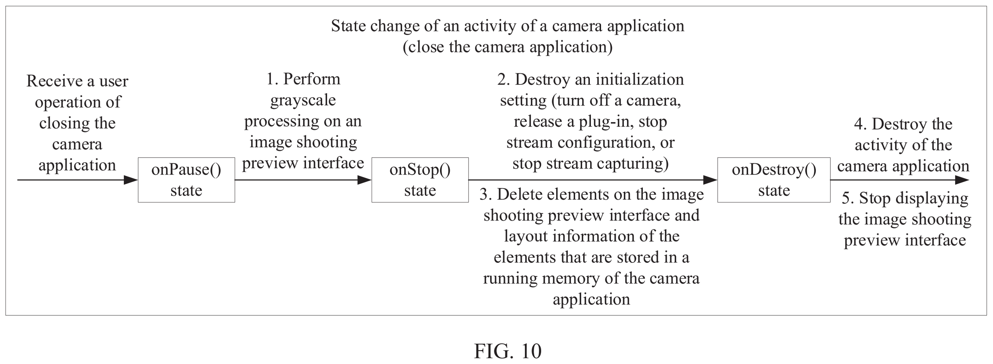

FIG. 10 is a diagram of a state change process in a lifecycle of an activity of a camera application in a case in which an electronic device 100 closes the camera application based on a user operation.

As shown in FIG. 10, the electronic device 100 may receive a user operation of closing the camera application, and the activity of the camera application is in an onPause() state.

In response to the activity of the camera application being in the onPause() state, the camera application performs grayscale processing on a displayed image shooting preview interface, so that the camera application cannot respond to various tap operations, slide operations, or the like performed by a user on the image shooting preview interface.

Optionally, when the activity of the camera application is in the onPause() state, the camera application may further perform more other operations. This is not limited in this application.

Then the activity of the camera application may switch from the onPause() state to an onStop() state.

In response to the activity of the camera application being in the onStop() state, the camera application needs to destroy an initialization setting, for example, perform an operation of turning off a camera, releasing a plug-in, stopping stream configuration, or stopping stream capturing.

In response to the activity of the camera application being in the onStop() state, the camera application further needs to delete elements on the image shooting preview interface and layout information of the elements that are stored in a running memory of the camera application.

Optionally, when the activity of the camera application is in the onStop() state, the camera application may further perform more other operations. This is not limited in this application.

Then the activity of the camera application may switch from the onStop() state to an onDestroy() state.

In response to the activity of the camera application being in the onDestroy() state, the camera application needs to destroy the activity of the camera application. After destroying the activity of the camera application, the camera application stops displaying the image shooting preview interface. Optionally, the camera application further needs to destroy a process of the camera application, release space of the running memory of the camera application, or the like, to close the camera application.

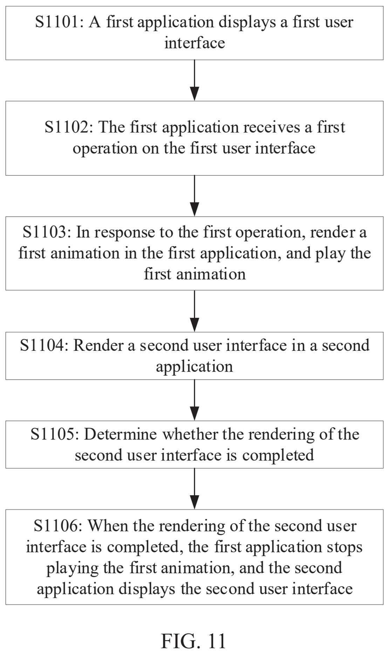

FIG. 11 is a schematic flowchart of an inter-application interaction method according to this application.

S1101: A first application displays a first user interface.

For example, the first application may be a camera application, and the first user interface may be an image shooting preview interface shown in FIG. 4A.

For example, the first application may be a gallery application, and the first user interface may be a user interface 5005 shown in FIG. 7A, or the first user interface may be a user interface shown in FIG. 4E.

S1102: The first application receives a first operation on the first user interface.

For example, when the first application is a camera application, the first operation may be a tap operation for a review control 104 shown in FIG. 4A.

For example, when the first application is a gallery application, the first operation may be a tap operation for a Back option 5007 shown in FIG. 7A, or the first operation may be a touch-and-hold and pull-down operation for a picture 5006 shown in FIG. 7B, or the first operation may be a touch-and-hold and pull-down operation for a picture shown in FIG. 4E.

S1103: In response to the first operation, render a first animation in the first application, and play the first animation.

Optionally, rendering the first animation in the first application may mean that the first application renders the first animation, or may mean that a system function on an electronic device renders the first animation.

For example, when the first application is a camera application, the first animation may also be referred to as a first switching animation. The first animation may include an animation frame 5001, an animation frame 5002, an animation frame 5003, and an animation frame 5004.

For example, when the first application is a gallery application, the first animation may also be referred to as a second switching animation. The first animation may include an animation frame 7001, an animation frame 7002, an animation frame 7003, and an animation frame 7004.

For example, the first animation may alternatively include an animation frame 5004, an animation frame 5003, an animation frame 5002, and an animation frame 5001.

S1104: Render a second user interface in a second application.

Optionally, rendering the second user interface in the second application may mean that the second application renders the second user interface, or may mean that a system function on the electronic device renders the second user interface.

For example, when the second application is a gallery application, the second user interface may be a large-image preview interface shown in FIG. 4E. In some embodiments, the second user interface may alternatively be a large-image editing interface shown in FIG. 4F.

For example, when the second application is a camera application, the second user interface may be an image shooting preview interface shown in FIG. 7G.

S1105: Determine whether the rendering of the second user interface is completed.

S1106: When the rendering of the second user interface is completed, the first application stops playing the first animation, and the second application displays the second user interface.

According to the method, when receiving a user operation for jumping to the second application, the electronic device may play an animation by using the first application, and the second application renders the to-be-displayed second user interface. The first animation is played without waiting until drawing and rendering of the to-be-displayed second user interface in the second application are completed. This shortens a delay of playing the first animation by the electronic device, addresses slow response of the electronic device to the user operation for jumping to the second application, reduces waiting time of a user, and improves visual experience of the user.

In a possible implementation, playing, by the first application, the first animation and rendering the second user interface are performed in parallel.

To be specific, when receiving the user operation for jumping to the second application, the electronic device may play the animation by using the first application, and the second application renders the to-be-displayed second user interface at the same time. The first animation needs to wait for drawing and rendering of the to-be-displayed second user interface in the second application to be completed before the first animation is played.

In a possible implementation, when the rendering of the second user interface is completed, the method further includes: determining, by the second application, whether the playing of the first animation is completed; and when it is determined that the playing of the first animation is not completed, rendering, in the second application, an unplayed animation frame in the first animation, and playing the unplayed animation frame; and after the second application completes playing the unplayed animation frame, displaying, by the second application, the second user interface; or when it is determined that the playing of the first animation is completed, displaying, by the second application, the second user interface.

Optionally, after the first application stops playing the first animation, the first application may send a play progress of the first animation to the second application, so that the second application determines whether to continue to play the first animation.

When the playing of the first animation is completed, the second application directly switches to displaying the second user interface, without continuing to play the first animation. When the playing of the second user interface is not completed, the second application needs to continue to play the unplayed animation frame in the first animation, and after completing playing the unplayed animation frame in the first animation, the second application switches to displaying the second user interface. This can ensure that the electronic device switches to displaying the second user interface after the playing of the first animation is completed, to ensure that the electronic device smoothly switches from the first animation to displaying the second user interface.

In a possible implementation, when the rendering of the second user interface is not completed, the method further includes: determining, by the first application, whether the playing of the first animation is completed; and when the playing of the first animation is not completed, rendering, in the first application, an unplayed animation frame in the first animation, and playing the unplayed animation frame; or when the playing of the first animation is completed, displaying, by the first application, a third user interface, where the third user interface includes a last animation frame in the first animation.

For example, the third user interface may be the user interface shown in FIG. 4E.

Optionally, the second application may send a rendering progress of the second user interface to the first application, so that the first application can determine whether the rendering of the second user interface is completed.

When the rendering of the second user interface is completed, the first application needs to stop playing the first animation. When the rendering of the second user interface is not completed, the first application may continue to play the first animation.

In a possible implementation, the second user interface includes image content of the last animation frame in the first animation.

In this way, when the playing of the first animation is completed and the rendering of the second user interface has not been completed, the electronic device needs to continuously display the last animation frame in the first animation. The image content of the last animation frame in the first animation is set to be the same as or similar to image content of the second user, to ensure that the electronic device smoothly switches from the last animation frame in the first animation to displaying the second user interface, without an abrupt picture transition.

In a possible implementation, after receiving, by the first application, the first operation on the first user interface, the method further includes: determining, by the electronic device, whether there is a process of the second application; and when determining that there is no process of the second application, creating, by the electronic device, a process of the second application.

In this way, when the electronic device needs to use the second application, the electronic device may create a process of the second application, that is, start the second application, to ensure that the electronic device can normally use the second application. Compared with a solution in which a process of the second application is immediately created when the electronic device starts the first application, this can save memory space of the electronic device and avoid a waste of resources. In addition, if no process of the second application has been created before, when the first application receives a user operation, the electronic device creates a process of the second application. Because the first application further needs to play the first animation, the electronic device may create the process of the second application at the same time. The first animation is played without waiting until the electronic device creates the process of the second application. In other words, playing, by the first application, the first animation and creating, by the electronic device, the process of the second application are performed in parallel.

In a possible implementation, the first application is a camera application, the first user interface is an image shooting preview interface of the camera application, the second application is a gallery application, the first operation is an operation of tapping a thumbnail, and the second user interface includes an original image corresponding to the thumbnail.

In this way, jumping from the camera application to the gallery application can be implemented.

In a possible implementation, the first animation is an animation for transition from the thumbnail to the original image.

In a possible implementation, the second user interface does not include a control in a gallery. This can ensure that the image content of the last animation frame in the first animation is the same as or similar to the image content of the second user interface.

In a possible implementation, after displaying, by the second application, the second user interface, the method further includes: receiving, by the second application, a second operation of the user on the second user interface; and displaying, by the second application, a fourth user interface in response to the second operation, where the fourth user interface includes the original image corresponding to the thumbnail and a control in the gallery.

For example, the fourth user interface may be a user interface 5005 shown in FIG. 4F, and the user interface 5005 may also be referred to as a large-image editing interface.

In this way, after the electronic device displays the second user interface, the electronic device may receive a user operation and display the fourth user interface, and the user may edit, on the fourth user interface, the original image corresponding to the thumbnail.

In a possible implementation, after stopping, by the first application, playing the first animation, the method further includes: performing, by the first application, any one or more of the following task items: turning off a camera, releasing a plug-in, stopping stream configuration, and stopping stream capturing.

In this way, the first application destroys an initialization setting only when determining that the rendering of the second user interface is completed, to avoid a case that frame freezing occurs due to frame loss when the first application plays the first animation.

This application provides an electronic device. The electronic device includes a memory and a processor. The memory is coupled to the processor. The memory is configured to store a computer program. When the processor invokes the computer program, the electronic device is enabled to perform the inter-application interaction method shown in FIG. 11.

This application provides a computer-readable storage medium, including instructions. When the instructions are run on an electronic device, the electronic device is enabled to perform the inter-application interaction method shown in FIG. 11.

This application provides a chip system. The chip system includes one or more processors. The processor is configured to invoke computer instructions, to enable an electronic device to perform the inter-application interaction method shown in FIG. 11.

This application provides a computer program product including instructions. When the computer program product is run on an electronic device, the electronic device is enabled to perform the inter-application interaction method shown in FIG. 11.

The following describes a hardware structure of an electronic device 100 provided in embodiments of this application.

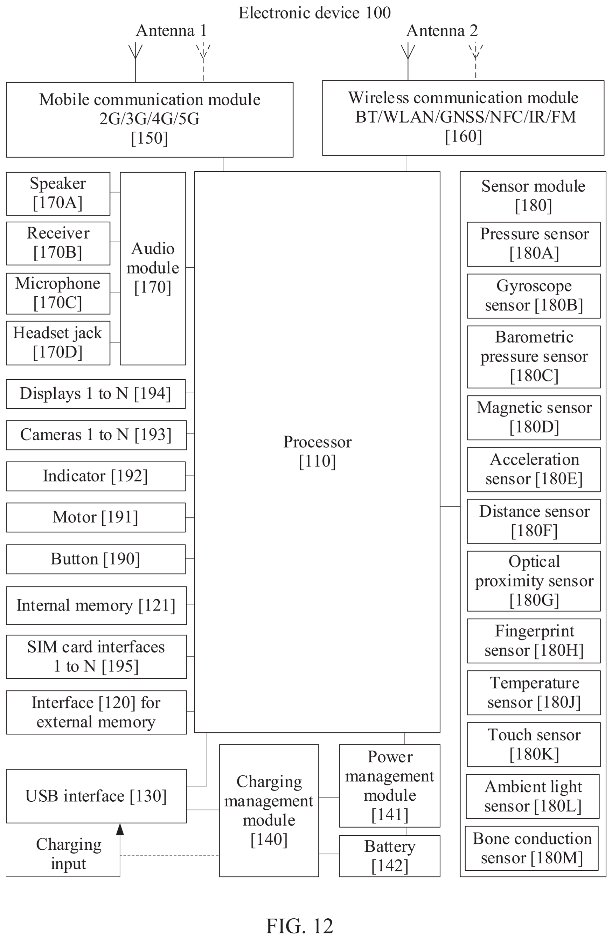

FIG. 12 is a diagram of a hardware structure of an electronic device 100.

The electronic device 100 is used below as an example to describe embodiments in detail. It should be understood that the electronic device 100 shown in FIG. 12 is merely an example, and the electronic device 100 may include more or fewer components than those shown in FIG. 12, or two or more components may be combined, or there may be different component configurations. Components shown in FIG. 12 may be implemented in hardware that includes one or more signal processing circuits and/or application-specific integrated circuits, software, or a combination of hardware and software.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or the components may be arranged differently. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a timing signal, to control instruction fetching and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sampling, quantization, and encoding of an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be used for connecting a charger to charge the electronic device 100, or may be configured to transmit data between the electronic device 100 and a peripheral device, or may be used for connecting a headset for playing audio through the headset. The interface may alternatively be configured to connect to another electronic device, for example, an AR device.

It can be understood that an interface connection relationship between the modules shown in this embodiment of the present invention is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. While charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, an antenna 1 may be reused as a diversity antenna of a wireless local area network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communications processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and luminance of the image. The ISP may further optimize parameters such as exposure and color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process other digital signals in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the electronic device 100 may be implemented through the NPU.

The interface 120 for external memory may be used for connecting an external memory card, for example, a microSD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code, and the executable program code includes instructions. The processor 110 runs the instructions stored in the internal memory 121 to implement various function applications and data processing of the electronic device 100. The internal memory 121 may include a program storage area and a data storage area. The program storage area may store an operating system, an application for at least one function (for example, a sound play function or an image play function), and the like. The data storage area may store data (for example, audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode through the speaker 170A.

The receiver 170B, also referred to as an "earpiece", is configured to convert an audio electrical signal into a sound signal. When a call is answered or a voice message is listened to through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may move the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and recognize a sound source, to implement a directional recording function and the like.

The headset jack 170D is used for connecting a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation strength is less than a first pressure threshold is performed on an SMS message application icon, an instruction for viewing an SMS message is executed. When a touch operation whose touch operation strength is greater than or equal to the first pressure threshold is performed on the SMS message application icon, an instruction for creating a new SMS message is executed.

The gyroscope sensor 180B may be configured to determine a motion attitude of the electronic device 100. In some embodiments, an angular velocity of the electronic device 100 around three axes (that is, axes x, y, and z) may be determined by the gyroscope sensor 180B. The gyroscope sensor 180B may be configured to implement image stabilization during image shooting. For example, when the shutter is pressed, the gyroscope sensor 180B detects an angle at which the electronic device 100 shakes, calculates, based on the angle, a distance for which a lens module needs to compensate, and allows the lens to cancel the shake of the electronic device 100 through reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude based on a value of the barometric pressure measured by the barometric pressure sensor 180C, to provide assistance for positioning and navigation.

The magnetic sensor 180D includes a Hall effect sensor. The electronic device 100 may detect opening and closing of a flip leather case through the magnetic sensor 180D. In some embodiments, when the electronic device 100 is a clamshell phone, the electronic device 100 may detect opening and closing of a flip cover based on the magnetic sensor 180D. Further, a feature, for example, automatic unlocking, of the flip cover is set based on a detected opening/closing state of the leather case or a detected opening/closing state of the flip cover.

The acceleration sensor 180E may detect accelerations of the electronic device 100 in various directions (usually on three axes). When the electronic device 100 is still, a magnitude and a direction of gravity may be detected. The acceleration sensor may be further configured to recognize a posture of the electronic device, and is used in landscape/portrait mode switching or an application, for example, a pedometer.

The distance sensor 180F is configured to measure a distance. The electronic device 100 may measure a distance by using infrared or laser. In some embodiments, in an image shooting scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, through the optical proximity sensor 180G, that a user holds the electronic device 100 close to an ear for a call, to automatically turn off a screen for power saving. The optical proximity sensor 180G may also be used in a smart cover mode or a pocket mode for automatic screen unlocking or locking.

The ambient light sensor 180L is configured to sense luminance of ambient light. The electronic device 100 may adaptively adjust luminance of the display 194 based on the sensed luminance of ambient light. The ambient light sensor 180L may also be configured to automatically adjust white balance during photographing. The ambient light sensor 180L may also cooperate with the optical proximity sensor 180G to detect whether the electronic device 100 is in a pocket, to avoid mistouch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is lower than another threshold, the electronic device 100 heats the battery 142 to prevent the electronic device 100 from being shut down abnormally due to low temperature. In some other embodiments, when the temperature is lower than still another threshold, the electronic device 100 boosts an output voltage of the battery 142 to avoid abnormal shutdown due to low temperature.

The touch sensor 180K is also referred to as a "touch panel". The touch sensor 180K may be disposed in the display 194. The touch sensor 180K and the display 194 constitute a touchscreen, which is also referred to as a "touch screen". The touch sensor 180K is configured to detect a touch operation performed on or near the touch sensor. The touch sensor may transmit the detected touch operation to the application processor to determine a type of a touch event. The display 194 may provide a visual output related to the touch operation. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to constitute a bone conduction headset. The audio module 170 may obtain a speech signal through parsing based on the vibration signal, obtained by the bone conduction sensor 180M, of the vibration bone of the vocal-cord part, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive an input on the button, and generate a button signal input related to a user setting and function control of the electronic device 100.

The motor 191 may generate a vibration prompt. The motor 191 may be configured to produce an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information reception, an alarm clock, and a game) may also correspond to different vibration feedback effects. Touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card.

A software system of the electronic device 100 may use a hierarchical architecture, an event-driven architecture, a microkernel architecture, a microservice architecture, or a cloud architecture. In embodiments of the present invention, an Android system with a hierarchical architecture is used as an example to describe a software structure of the electronic device 100.

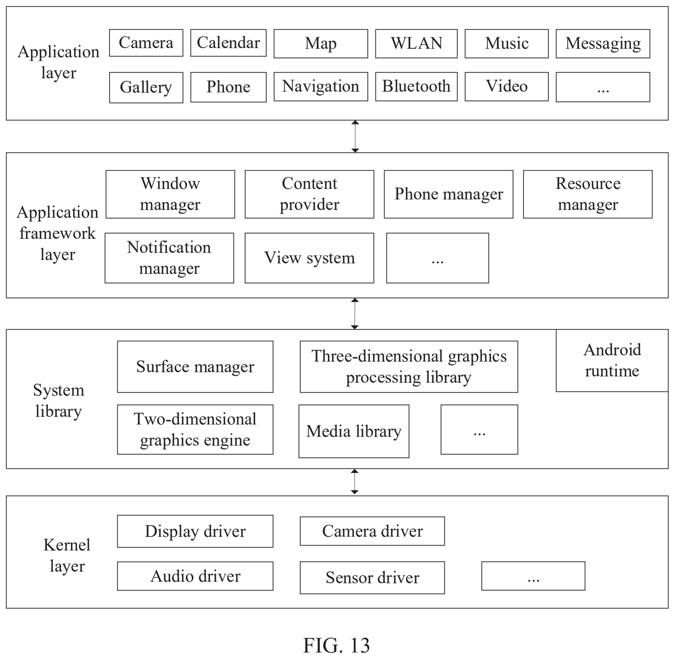

FIG. 13 is a block diagram of a software structure of an electronic device 100 according to an embodiment of the present invention.

In the hierarchical architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 13, the application packages may include applications such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 13, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, or the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on a screen in a form of a dialog window. For example, text information is displayed in the status bar, an alert tone is played, the electronic device vibrates, or an indicator blinks.

The Android runtime includes a core library and a virtual machine. The Android runtime is responsible for scheduling and management of the Android system.

The core library includes two parts: a function that needs to be invoked in Java language and a core library of Android.

The application layer and the application framework layer run in a virtual machine. The virtual machine executes Java files at the application layer and the application framework layer as binary files. The virtual machine is configured to perform functions of object lifecycle management, stack management, thread management, security and exception management, garbage collection, and the like.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

## Claims

1. An inter-application interaction method, wherein a first application and a second application are installed on an electronic device, and the method comprises:
displaying, by the first application, a first user interface;
receiving, by the first application, a first operation on the first user interface;
in response to the first operation, rendering a first animation in the first application, and playing the first animation;
rendering a second user interface in the second application;
determining whether the rendering of the second user interface is completed;
when the rendering of the second user interface is completed, stopping, by the first application, playing the first animation; and
displaying, by the second application, the second user interface.

2. The method according to claim 1, wherein playing, by the first application, the first animation and rendering the second user interface are performed in parallel.

3. The method according to claim 1 or 2, wherein when the rendering of the second user interface is completed, the method further comprises:
determining, by the second application, whether the playing of the first animation is completed; and
when it is determined that the playing of the first animation is not completed, rendering, in the second application, an unplayed animation frame in the first animation, and playing the unplayed animation frame; and
after the second application completes playing the unplayed animation frame, displaying, by the second application, the second user interface; or
when it is determined that the playing of the first animation is completed, displaying, by the second application, the second user interface.

4. The method according to any one of claims 1 to 3, wherein when the rendering of the second user interface is not completed, the method further comprises:
determining, by the first application, whether the playing of the first animation is completed; and
when the playing of the first animation is not completed, rendering, in the first application, an unplayed animation frame in the first animation, and playing the unplayed animation frame; or
when the playing of the first animation is completed, displaying, by the first application, a third user interface, wherein the third user interface comprises a last animation frame in the first animation.

5. The method according to any one of claims 1 to 4, wherein the second user interface comprises image content of the last animation frame in the first animation.

6. The method according to any one of claims 1 to 5, wherein after receiving, by the first application, the first operation on the first user interface, the method further comprises:
determining, by the electronic device, whether there is a process of the second application; and
when determining that there is no process of the second application, creating, by the electronic device, a process of the second application.

7. The method according to any one of claims 1 to 6, wherein the first application is a camera application, the first user interface is an image shooting preview interface of the camera application, the second application is a gallery application, the first operation is an operation of tapping a thumbnail, and the second user interface comprises an original image corresponding to the thumbnail.

8. The method according to claim 7, wherein the first animation is an animation for transition from the thumbnail to the original image.

9. The method according to claim 7 or 8, wherein the second user interface does not comprise a control in a gallery.

10. The method according to any one of claims 7 to 9, wherein after displaying, by the second application, the second user interface, the method further comprises:
receiving, by the second application, a second operation of the user on the second user interface; and
displaying, by the second application, a fourth user interface in response to the second operation, wherein the fourth user interface comprises the original image corresponding to the thumbnail and a control in the gallery.

11. The method according to any one of claims 7 to 10, wherein after stopping, by the first application, playing the first animation, the method further comprises:
performing, by the first application, any one or more of the following task items: turning off a camera, releasing a plug-in, stopping stream configuration, and stopping stream capturing.

12. An electronic device, wherein the electronic device comprises a memory and a processor, the memory is coupled to the processor, the memory is configured to store a computer program, and when the processor invokes the computer program, the electronic device is enabled to perform the method according to any one of claims 1 to 11.

13. A computer-readable storage medium, comprising instructions, wherein when the instructions are run on an electronic device, the electronic device is enabled to perform the method according to any one of claims 1 to 11.

14. A computer program product comprising instructions, wherein when the computer program product is run on an electronic device, the electronic device is enabled to perform the method according to any one of claims 1 to 11.
